# EUROPÄISCHE PATENTSCHRIFT

(11) **EP 4 594 030 B1**
(45) Veröffentlichungstag und Bekanntmachung des Hinweises auf die Patenterteilung: **04.11.2026**
(21) Anmeldenummer: 23782461.0
(22) Anmeldetag: 26.09.2023
(51) Int. Cl.: B21C 51/00, B21D 3/05, B21F 1/02, G01B 5/20, G01B 11/24

(54) **VERFAHREN UND FERTIGUNGSANLAGE ZUM HERSTELLEN VON STABLEITERN**
METHOD AND MANUFACTURING FACILITY FOR PRODUCING BAR CONDUCTORS
PROCÉDÉ ET INSTALLATION DE FABRICATION POUR PRODUIRE DES BARRES CONDUCTRICES

(30) Priorität: 28.09.2022 DE 102022210293
(43) Veröffentlichungstag der Anmeldung: 06.08.2025
(73) Patentinhaber: FELSOMAT GmbH & Co. KG, 75203 Königsbach-Stein (DE)
(72) Erfinder: PESCHINA, Jürgen, 75438 Knittlingen (DE); SORG, Robin, 74357 Bönnigheim (DE)
(74) Vertreter: Kohler Schmid Möbus Patentanwälte
(86) Internationale Anmeldenummer: PCT/EP2023/076594
(87) Internationale Veröffentlichungsnummer: WO 2024/068663

(56) Entgegenhaltungen:
- EP-A1- 3 065 241
- EP-A1- 3 346 230
- WO-A1-2019/082134
- WO-A1-2020/126259
- WO-A1-2022/069145
- DE-C1- 19 503 850
- DE-C2- 3 122 742
- GB-A- 566 596
- US-B1- 7 480 987

## Beschreibung

### Hintergrund der Erfindung

Die Erfindung betrifft ein Verfahren zum Herstellen von Stableitern, wobei Draht von einer Spule abgewickelt wird, wobei der abgewickelte Draht mit einer Richteinrichtung geradegerichtet wird, wobei der geradegerichtete Draht zerteilt wird, sodass gerade Stableiter erhalten werden, und wobei die geraden Stableiter mehrheitlich einer nachfolgenden Bearbeitung zugeführt werden. Die Erfindung betrifft ferner eine Fertigungsanlage für Stableiter aufweisend wenigstens eine Herstellmaschine für Stableiter mit einer Abrolleinrichtung zum Abwickeln von Draht von einer Spule, mit einer Richteinrichtung zum Geraderichten des abgewickelten Drahts und mit einer Trenneinrichtung zum Zerteilen des Drahtes, sodass einzelne Stableiter erhalten werden.

Solche Verfahren und Fertigungsanlagen sind grundsätzlich bekannt, beispielsweise aus US 7 480 987 B1.

US 7 480 987 B1 beschreibt ein Verfahren und eine Vorrichtung zum Vorformen isolierter Leiter für Rotoren und Statoren, wobei die Leiter in einem nachfolgenden Prozess zur Herstellung von Rotoren und Statoren von Elektromotoren verwendet werden. Isolierter Draht mit rechteckigem Querschnitt wird von einer Spule erhalten, geradegerichtet, über eine vorbestimmte Länge abisoliert, einer Biegemaschine zugeführt, auf Länge geschnitten und dann in die gewünschte Haarnadelform gebogen und auf einen Zuführer für den nächsten Prozess gelegt. Das Verfahren und die Vorrichtung können automatisch zur Herstellung von haarnadelförmigen Leitern unterschiedlicher Länge angepasst werden, wobei jede Länge über eine gewünschte Länge abisoliert wird.

Elektrische Maschinen, z. B. Elektromotoren, weisen verbreitet einen Stator mit einer sogenannten Spulenwicklung auf. Traditionell wird die Spulenwicklung durch Aufwickeln eines Drahtes hergestellt. Solche Wickelverfahren sind jedoch technisch sehr aufwendig und unterliegen technischen Einschränkungen. Zudem ist der Füllungsgrad (Flächenanteil des Drahtes in einem überwickelten Querschnitt) bei gewickelten Spulen begrenzt.

Spulen von Statoren elektrischer Maschinen können alternativ auch durch miteinander verbundene Stableiter, die in einen Grundkörper des Stators eingesteckt sind, ausgebildet sein. Insbesondere im Bereich elektromotorisch angetriebener Kraftfahrzeuge werden zunehmend Elektromotoren mit Statoren mit Stableitern eingesetzt. Diese Stableiter sind typischerweise zumindest abschnittsweise gerade. Häufig weisen die Stableiter einen Rechteckquerschnitt auf, wodurch ein besonders hoher Füllgrad im Stator erreicht werden kann. Näherungsweise U-förmige Stableiter, sogenannte Hairpins, werden in der Regel durch Biegen gerader Stableiter, sogenannter I-Pins, erhalten. Um die Stableiter in Aufnahmeschächte im Grundkörper einfügen zu können, ist es erforderlich, dass die geraden Abschnitte der Stableiter, insbesondere die beiden Schenkel eines U-förmig gebogenen Stableiters, nur minimale Abweichungen von einer ideal geraden Erstreckung aufweisen. Die erreichbare Geradheit der Schenkel eines U-förmigen Stableiters wird dabei von der Geradheit eines insgesamt geraden (I-förmigen) Stableiters bzw. Stableiter-Rohlings bestimmt, aus welchem der U-förmige Stableiter durch Biegen erhalten wurde.

Stableiter mit einer zu großen Krümmung in den nominell geraden Abschnitten können nicht in den Grundkörper eingesetzt werden, sodass der Fertigungsablauf unterbrochen werden muss. Es ist daher erforderlich, sicherzustellen, dass nur Stableiter mit einem hinreichend exakt geraden Verlauf der beiden Schenkel zum Einsetzen bereitgestellt werden.

Aus EP 1 944 570 B1 ist ein Verfahren zur Messung der Geradheit von gewalzten, stabförmigen Langprodukten, wie Schienen, Trägern, Stäben oder dergleichen, bekannt. Das bekannte Verfahren wird mittels einer Messeinrichtung durchgeführt, deren Messwerte einem Zentralrechner zugeführt werden. Das die Messeinrichtung durchlaufende Langprodukt wird zwischen zwei voneinander beabstandeten, dem Langprodukt Auflager bereitstellenden Bereichen der Messeinrichtung definiert eingespannt, wobei zwischen den Einspannbereichen ein freier Längenabschnitt ohne Abstützung des Langprodukts ausgebildet ist. Die Messeinrichtung besteht aus zwei voneinander beabstandeten Gruppen mit jeweils zwei Rollenpaaren, wobei den unteren Rollen entsprechend obere Rollen zugeordnet sind. Die beiden Rollenpaare bilden die Einspannbereiche für das die Messeinrichtung in Materialflussrichtung kontinuierlich durchlaufende Langprodukt. Das durchlaufende Langprodukt nimmt zwischen den Rollenpaaren bzw. Einspannbereichen eine definierte, ungestützte Einspannlänge ein. In diesem ungestützten Einspannlängenbereich erfährt das Langprodukt aufgrund des Eigengewichts eine Auslenkung, die durch Beaufschlagung mit einer Kraft gezielt mit elastischer Verformung ausgeprägt werden kann. Eine mit ideeller Geradheit über die ungestützte Einspannlänge gelegte Sehne erlaubt es, mit einem geeigneten Messmittel die Auslenkung und die resultierende Kraft zu ermitteln und die Sehne als Funktion von der Auslenkung und der aufgebrachten Kraft zu bestimmen. Die Messwerte werden einem übergeordneten Zentralrechner zugeleitet. Das bekannte Verfahren ermöglicht eine kontinuierliche Kontrolle und Dokumentation der Geradheit eines die Messeinrichtung mit einer hohen Durchlaufgeschwindigkeit durchlaufenden Langprodukts.

Aus EP 0 935 120 A2 ist ein Verfahren zur Bestimmung einer Krümmung von Langgut, insbesondere von gewalzten Trägern, Schienen und dergleichen, bekannt. Das Langgut wird über einen Rollengang mit mehreren Stützrollen geführt. In Abhängigkeit von der Krümmung des Langguts wird auf eine Messrolle des Rollengangs eine Kraft ausgeübt, die gemessen wird. Aus einer Änderung der gemessenen Kraft beim Auf- bzw. Ablaufen des Langguts auf bzw. von einer der Stützrollen kann auf die Krümmung des Langguts geschlossen werden.

Die beiden vorgenannten Verfahren bzw. Vorrichtungen eignen sich insbesondere für stabile Produkte wie Schienen, Träger oder Stäbe, die während der Messung in ihrer Längsrichtung bewegt werden.

DE 195 03 850 C1 beschreibt einen nichtrotierenden Richtapparat für Biegemaschinen mit integrierter Messvorrichtung mit einem nicht rotierenden in wenigstens einer Richtebene arbeitenden Richtwerk für Draht- oder Bandmaterial, mit mehreren, aufeinanderfolgenden, das Material bearbeitenden Richtrollen, die in der Richtebene und quer zur Durchlaufachse des Materials mittels wenigstens eines Stelltriebs einstellbar sind. Im Richtapparat ist in Durchlaufrichtung des Materials hinter dem Richtwerk eine Material-Biegungs-Messvorrichtung vorgesehen, in der eine Messstrecke für einen in der Länge vorbestimmten Materialabschnitt vorgesehen ist. Entlang der Messstrecke ist eine das Ausmaß der Biegung und den Biegungssinn ermittelnde Abtastvorrichtung angeordnet. Innerhalb der Messstrecke können zwei in Durchlaufrichtung beabstandete, stationäre Referenzstützstellen in der Durchlaufachse des Materials und wenigstens eine von beiden Referenzstützstellen beabstandete, vorzugsweise zwischen den Referenzstützstellen liegende, Messstelle vorgesehen sein, wobei die Abtastvorrichtung bei bzw. in der Messstelle angeordnet ist. Mit der Abtastvorrichtung sind die gemessene Biegung des Materialabschnitts repräsentierende Signale erzeugbar. Ein Stelltrieb wenigstens einer Richtrolle spricht auf die Signale mit korrigierenden Stellbewegungen an. Das in DE 195 03 850 C1 beschriebene Vorgehen zur Geradheitsprüfung wird an endlosem Draht- oder Bandmaterial durchgeführt.

DE 10 2021 212 056 A1 betrifft eine Messeinheit zum Messen von Restkrümmungen an gerichtetem drahtförmigen oder rohrförmigen Richtgut, welches ein Richtsystem mit zwei hintereinander geschalteten einstellbaren Rollenrichtapparaten mit unterschiedlich orientierten Richtebenen durchlaufen hat. Die Messeinheit umfasst eine Messvorrichtung zur Aufnahme jeweils eines von dem Richtgut abgetrennten stabförmigen Abschnitts des durch das Richtsystem hindurchgelaufenen Richtguts in einer Messposition und zur Ermittlung von Messdaten, die eine Restkrümmung des gerichteten Richtguts repräsentieren. Die Messeinheit ist für eine Richtebenen-spezifische Messung konfiguriert, die eine Zuordnung der durch die Messdaten repräsentierten Krümmungs-Anteile zu den unterschiedlichen Richtebenen der Rollenrichtapparate erlaubt. Die Messvorrichtung kann ein optisches Messsystem umfassen, das mittels Laserstrahlung zwei in der Messebene liegende, zueinander senkrechte Laserlichtvorhänge erzeugt und mittels gegenüberliegender lichtempfindlicher Sensoren detektiert, wodurch mittels Schattenprojektion die Position des Richtguts in der Messebene in zwei Richtungen hochgenau bestimmbar ist. Um eine Richtebenen-spezifische bzw. Richtebenen-selektive Messung zu realisieren, ist vorzugsweise vorgesehen, dass die Messeinheit derart konfiguriert ist, dass das Richtgut in derjenigen Drehlage gemessen wird, in der es durch das Richtsystem gelaufen ist. In DE 10 2021 212 056 A1 wird weiter ausgeführt, dass Richtebenen-spezifische Messdaten auch dadurch ermittelt werden könnten, dass eine eventuelle Drehung des Richtguts zwischen Abtrennen und Messen messtechnisch erfasst und die mit der Messvorrichtung ermittelten Messdaten dann bezüglich der Drehrichtung korrigiert werden. Es wird in DE 10 2021 212 056 A1 jedoch als wesentlich einfacher und genauer angesehen, solche Eigenrotationen durch verfahrenstechnische und konstruktive Maßnahmen auszuschließen.

Stableiter für elektrische Maschinen sind häufig sehr empfindlich, sodass sie sich bereits bei geringer Krafteinwirkung dauerhaft verformen. Eine Geradheitsmessung ist dann nicht mehr aussagekräftig. Zudem erfordert die Weiterverarbeitung von Stableitern ein besonders hohes Maß an Geradheit.

### Aufgabe der Erfindung

Es ist eine Aufgabe der Erfindung, beim Herstellen von Stableitern eine hohe Fertigungsqualität zu gewährleisten.

### Beschreibung der Erfindung

Diese Aufgabe wird erfindungsgemäß gelöst durch ein Verfahren gemäß Anspruch 1 und eine Fertigungsanlage mit den in Anspruch 8 angegebenen Merkmalen. Die jeweiligen Unteransprüche geben vorteilhafte Varianten bzw. Ausführungsformen an.

### Erfindungsgemäßes Herstellverfahren

Erfindungsgemäß ist ein Verfahren zum Herstellen von Stableitern vorgesehen,
wobei Draht von einer Spule abgewickelt wird;
wobei der abgewickelte Draht mit einer Richteinrichtung geradegerichtet wird;
wobei der geradegerichtete Draht zerteilt wird, sodass gerade Stableiter erhalten werden;
wobei die geraden Stableiter mehrheitlich einer nachfolgenden Bearbeitung zugeführt werden;
und wobei mehrere der geraden Stableiter zu einer Messstation mit zwei voneinander beabstandeten Auflagen verbracht werden, wo zur Geradheitsprüfung eine Durchbiegung des jeweiligen Stableiters unter seinem Eigengewicht ermittelt wird.

Das Herstellverfahren wird vorzugsweise mit einer unten beschriebenen, erfindungsgemäßen Fertigungsanlage durchgeführt.

Auf der Spule kann Draht für die Herstellung einer Vielzahl von Stableitern bereitgestellt werden. Der auf der Spule aufgewickelte Draht ist in der Regel durchgängig mit einer Isolierschicht überzogen. Der Draht bzw. die Stableiter weisen typischerweise einen Rechteckquerschnitt auf. Eine Kantenlänge des Rechteckquerschnitts kann wenigstens 1 mm, insbesondere wenigstens 2 mm und/oder höchstens 8 mm, insbesondere höchstens 6 mm, betragen. Der Draht bzw. die Stableiter können aus einer Kupferlegierung bestehen.

Nach dem Abwickeln wird der Draht geradegerichtet. Hierzu dient die Richteinrichtung. Das Geraderichten erfolgt zumindest in einer Ebene, insbesondere derjenigen Ebene, in welcher der Draht beim auf der Spule die größte Krümmung aufwies. Vorzugsweise wird der Draht auch in einer zweiten Ebene geradegerichtet, wobei die zweite Richtebene typischerweise senkrecht zur ersten Richtebene verläuft.

Durch Zerteilen des Drahtes werden einzelne gerade Stableiter erhalten. Zum Zerteilen kann eine Trenneinrichtung mit einem Messer und einem Amboss eingesetzt werden. Eine Länge der Stableiter kann wenigstens 200 mm und/oder höchstens 800 mm betragen.

Die Stableiter werden überwiegend weiterbearbeitet, teilweise jedoch auf Geradheit geprüft. Die geprüften Stableiter werden grundsätzlich nicht weiterbearbeitet. Typischerweise werden wenigstens 99 %, vorzugsweise wenigstens 99,5 % der Stableiter der nachfolgenden Bearbeitung zugeführt. Typischerweise wird wenigstens jeder fünftausendste, vorzugsweise wenigstens jeder tausendste Stableiter an der Messstation auf Geradheit geprüft.

Zur Geradheitsprüfung eines jeweiligen Stableiters wird dessen schwerkraftbedingte Durchbiegung bei Auflage auf zwei Auflagen bestimmt. Die auf die Auflagen aufgelegten Stableiter biegen sich mit anderen Worten unter ihrem Eigengewicht durch. Typischerweise werden die Stableiter jeweils mit einer Flachseite auf die Auflagen aufgelegt. Die Auflagen sind grundsätzlich auf gleichen vertikalen Höhen, d. h. in einer gemeinsamen horizontalen Ebene, angeordnet.

Die Abweichung der gemessenen Durchbiegung von einer nominellen Durchbiegung eines perfekt geraden Stableiters stellt ein Maß für die Geradheit des jeweiligen Stableiters dar. Die nominelle Durchbiegung kann vorab ermittelt worden sein.

Durch Auflegen der Stableiter auf die Auflagen erfolgt eine besonders schonende Geradheitsprüfung. Indem die schwerkraftbedingte Durchbiegung ermittelt wird, wird die Gefahr, die Stableiter vor oder bei der Prüfung plastisch zu verformen, weitestgehend ausgeschlossen. Zudem ermöglicht der Vergleich der gemessenen Durchbiegung mit der nominellen Durchbiegung eine besonders genaue Geradheitsprüfung. Das ermittelte Maß der Geradheit erlaubt eine Kontrolle und Überwachung des Herstellvorgangs. Wenn die geprüften Stableiter nicht hinreichend gerade sind, können geeignete Abhilfemaßnahmen eingeleitet werden.

Vorzugsweise ist vorgesehen, dass wenigstens einer der Stableiter auf den Auflagen um 180° um seine Längsachse gedreht wird, und dass bei beiden Ausrichtungen des Stableiters eine Durchbiegung aufgrund des Eigengewichts des Stableiters bestimmt wird. Der Stableiter wird mit anderen Worten in zwei um 180° gegeneinander gedrehten Ausrichtungen auf die Auflagen aufgelegt und es wird jeweils die schwerkraftbedingte Durchbiegung ermittelt. Die mittlere Durchbiegung bei den beiden gegeneinander gedrehten Ausrichtungen des wenigstens einen Stableiters entspricht einer nominellen Durchbiegung eines perfekt geraden Stableiters. Aufgrund diverser, schwer zu erfassender Einflussfaktoren (beispielsweise Schwankungen des Elastizitätsmoduls, Anisotropien, Dickenvariationen, unterschiedlich dicke Beschichtungen etc.) kann die nominelle Durchbiegung eines perfekt geraden Stableiters im Allgemeinen nicht hinreichend genau mit rechnerischen Verfahren bestimmt werden. Aufgrund der Empfindlichkeit der Stableiter wäre es in der Regel nicht oder nur mit unvertretbarem Aufwand möglich, einen (nahezu) perfekt geraden Stableiter als Kalibrierkörper bereitzustellen. Zudem bestünde die Gefahr, dass sich dieser Kalibrierkörper bei der Handhabung verbiegt, da er ebenso empfindlich ist wie die Stableiter, und somit unbrauchbar würde. Durch die Mittelwertbildung erfolgt eine Kalibrierung, ohne dass ein perfekt gerader Stableiter benötigt wird. Eine vorhandene Krümmung des wenigstens einen Stableiters wird durch das Bestimmen der Durchbiegungen in den beiden Ausrichtungen bei der Mittelwertbildung kompensiert. Die nominelle Durchbiegung kann explizit als der Mittelwert der ersten und zweiten Durchbiegungen ermittelt werden.

Die Geradheit weiterer gleichartiger Stableiter kann durch Vergleich einer (einzigen) ermittelten Durchbiegung eines jeweiligen weiteren Stableiters mit der nominellen Durchbiegung geprüft werden. Der Aufwand zum Bestimmen der Geradheit der weiteren Stableiter wird dadurch minimiert.

Es kann auch vorgesehen sein, dass alle zu prüfenden Stableiter auf den Auflagen um 180° um ihre Längsachse gedreht werden, und dass zur Geradheitsprüfung die beiden Durchbiegungen bei diesen beiden Ausrichtungen eines jeden zu prüfenden Stableiters miteinander verglichen werden. Die nominelle Durchbiegung kann individuell anhand der ersten und der zweiten Durchbiegung des jeweiligen Stableiters ermittelt werden. Für jeden einzelnen Stableiter kann derart eine individuelle Kalibrierung erfolgen. Die Geradheit kann somit unabhängig von beispielsweise Geometrieveränderungen wie Dickenvariationen zwischen unterschiedlichen Stableitern, unterschiedlichen Materialeigenschaften oder veränderlichen Eigenschaften einer Beschichtung bestimmt werden. Die Abweichung von der nominellen Durchbiegung kann durch Halbieren der Abweichung zwischen der ersten und der zweiten Durchbiegung ermittelt werden. Die nominelle Durchbiegung wird somit nur implizit ermittelt. Dies vereinfacht den rechnerischen Aufwand zur Durchführung des Verfahrens.

Es kann vorgesehen sein, dass die Geradheit der Stableiter in zwei, vorzugsweise zueinander senkrechten, Ebenen geprüft wird. Die beiden Ebenen sind relativ zu dem Stableiter definiert. Die Stableiter können hierzu auf den Auflagen um 90° um ihre Längsachse gedreht werden und es kann die jeweilige Durchbiegung unter dem Eigengewicht ermittelt werden. Wenigstens einer der Stableiter kann (gegenüber der ersten Ausrichtung) zudem um 270° auf den Auflagen gedreht werden, um eine nominelle Durchbiegung in der zweiten Ebene zu bestimmen. Es können auch alle zu prüfenden Stableiter in vier um je 90° gegeneinander gedrehten Ausrichtungen auf die Auflagen aufgelegt werden, um jeweils durch Vergleich der Durchbiegungen bei Auflage mit gegenüberliegenden Seiten die Geradheit in den beiden Ebenen zu prüfen. Die Bestimmung der Geradheit der Stableiter in der zweiten Ebenen erfordert nur einen geringen Zusatzaufwand.

Eine bevorzugte Verfahrensvariante ist dadurch gekennzeichnet, dass eine Einstellung der Richteinrichtung in Abhängigkeit vom Ergebnis der Geradheitsprüfung korrigiert wird. Die Geradheit der hergestellten Stableiter wird dadurch verbessert. Vorzugsweise wird die Einstellung der Richteinrichtung automatisch korrigiert. Dies verringert den Aufwand zur Korrektur und gewährleistet, dass stets eine optimale Einstellung erfolgt. Die Einstellung der Richteinrichtung wird insbesondere dann korrigiert, wenn die Prüfung eine unzulässig große Krümmung (d. h. unzureichende Geradheit) der Stableiter ergibt. Ein Grenzwert für die Krümmung, ab welcher eine Korrektur erfolgt, kann eine Abweichung von der nominellen Durchbiegung um wenigstens 0,1 mm, insbesondere wenigstens 0,05 mm, sein.

Die Richteinrichtung kann mehrere alternierend auf unterschiedlichen Seiten des Drahts angeordnete Richtrollen aufweisen. Solche Richteinrichtungen haben sich zum Herstellen von Stableitern bewährt. Besonders bevorzugt wird zum Korrigieren der Einstellung der Richteinrichtung eine Position der in Durchlaufrichtung des Drahts vorletzten Richtrolle (für eine Richtebene) verändert. Voreingestellte Positionen der übrigen Richtrollen können dabei unverändert bleiben. Das Einstellen an der vorletzten Rolle wirkt sich unmittelbar und in gut prognostizierbarer Weise auf die endgültige Krümmung bzw. Geradheit in der jeweiligen Richtebene aus. Dies vereinfacht es, eine geeignete Korrekturvorschrift aufzustellen.

Eine vorteilhafte Verfahrensvariante ist dadurch gekennzeichnet, dass zum Zuführen der Stableiter zu der nachfolgenden Bearbeitung eine Sortiermaschine mit einem um eine Drehachse drehbaren Rotor verwendet wird, wobei der Rotor mehrere in Umfangsrichtung gegeneinander versetzte Aufnahmen für je einen Stableiter aufweist; dass die der nachfolgenden Bearbeitung zuzuführenden Stableiter auf eine der Aufnahmen des Rotors aufgelegt werden, wobei sich die Aufnahme an einer Aufnahmestelle befindet; und dass die zu prüfenden Stableiter an der Aufnahmestelle auf bewegliche Auflagen der Messstation aufgelegt werden.

Die Sortiermaschine ermöglicht es, Stableiter mit erkannten Fehlern von der Weiterbearbeitung auszuschließen und Stableiter ohne erkannte Fehler der Weiterbearbeitung zuzuführen. Solche Fehler können beispielsweise Fehlstellen einer Isolierschicht sein, die auf optischem Wege erkannt wurden, insbesondere anhand einer Farbmarkierung, die in einem vorherigen Bearbeitungsschritt angebracht wurde.

Die weiterzubearbeitenden Stableiter werden an der Aufnahmestelle auf eine der Aufnahmen aufgelegt. Die zu prüfenden Stableiter werden an der Aufnahmestelle auf die Auflagen aufgelegt. Da die Stableiter nach dem Zerteilen stets an die Aufnahmestelle verbracht werden, wird das Weiterleiten der Stableiter von der Trenneinrichtung vereinfacht.

Um die weiterzubearbeitenden Stableiter weiterzuleiten, wird der Rotor der Sortiermaschine in einer ersten Richtung gedreht. Um fehlerhafte Stableiter aus dem Fertigungsablauf auszuschleusen wird der Rotor in einer zweiten Richtung (entgegen der ersten Richtung) gedreht. Indem sowohl weiterzuverarbeitende wie auch auszusortierende Stableiter an derselben Aufnahmestelle auf eine der Aufnahmen des Rotors verbracht werden, kann die Zufuhr der Stableiter unabhängig von deren weiterer Bestimmung stets in derselben Weise und Geschwindigkeit bzw. Taktrate erfolgen. Auch die Drehung des Rotors kann unabhängig von der Drehrichtung mit derselben Geschwindigkeit bzw. Taktrate erfolgen. In beiden Fällen (Ausschleusen bzw. Übergeben des Stableiters) wird der Rotor nach dem Auflegen eines Stableiters auf eine der Aufnahmen so weit gedreht, dass eine benachbarte Aufnahme zu der Aufnahmestelle gelangt. Somit kann der nächste Stableiter ohne Verzögerung oder gar Unterbrechung des Fertigungsablaufs auf diese Aufnahme aufgesetzt und - wie zuvor beschrieben - durch Drehen des Rotors in einer geeigneten Richtung sortiert werden.

Die Sortiermaschine kann eine in DE 10 2022 206 997 beschriebene Sortiermaschine sein. Für weitere Merkmale der Sortiermaschine wird auf die Beschreibung der Sortiermaschine in DE 10 2022 206 997 Bezug genommen.

Indem die zu prüfenden Stableiter an der Aufnahmestelle auf die Auflagen aufgelegt werden, können die Stableiter in besonders einfacher Weise der Geradheitsprüfung zugeleitet werden. Zum Prüfen wird der jeweilige Stableiter durch Bewegen der Auflagen zu einer Messeinrichtung der Messstation verbracht.

Bei einer bevorzugten Weiterbildung dieser Variante ist vorgesehen, dass beim Auflegen der zu prüfenden Stableiter auf die Auflagen der Messstation der Rotor so gedreht ist, dass sich keine der Aufnahmen an der Aufnahmestelle befindet. Dies vereinfacht es, die Aufnahmen an der Aufnahmestelle zu platzieren. Nach einem Sortiervorgang kann der Rotor um eine halbe Teilung (weiter) gedreht werden, um eine Aufnahme von der Aufnahmestelle zu entfernen. Sodann können die Auflagen der Messstation an die Aufnahmestelle verbracht und ein Stableiter aufgelegt werden.

Eine alternative Verfahrensvariante ist dadurch gekennzeichnet, dass die geraden Stableiter nach dem Zerteilen an eine Übergabestelle verbracht werden; und dass derselbe Greifer verwendet wird, um die weiterzubearbeitenden Stableiter von der Übergabestelle an die nachfolgende Bearbeitung weiterzugeben, und um die zu prüfenden Stableiter von der Übergabestelle auf die Auflagen der Messstation zu verbringen. Der Greifer kann zudem dazu verwendet werden, fehlerhafte Stableiter aus dem Fertigungsablauf auszuschleusen. Der Greifer ergreift somit einen jeden der Stableiter an der Übergabestelle und verbringt ihn in Abhängigkeit von dessen Bestimmung an eine entsprechend vorgesehene Stelle. Dies ermöglicht eine rationelle Prozessführung.

Die Weitergabe der weiterzubearbeitenden Stableiter kann beispielsweise an eine Speichereinrichtung, insbesondere eine Kassette, erfolgen. In der Speichereinrichtung können mehrere Stableiter gesammelt und gemeinsam der Weiterverarbeitung zugeführt werden. Anders als bei der unmittelbaren Übergabe einzelner Stableiter an einen Folgeprozess werden durch das Sammeln der Stableiter in der Speichereinrichtung Unterbrechungen des Folgeprozesses vermieden, wenn einer der Stableiter ausgeschleust wird und somit nicht für die Weiterbearbeitung zur Verfügung steht. Indem mehrere Stableiter in der Speichereinrichtung gesammelt und gemeinsam weitergegeben werden, wird ein Puffer für den Folgeprozess geschaffen.

Vorzugsweise wird der Greifer quer zur Längsrichtung der Stableiter verfahren. Dies verringert die erforderlichen Bewegungen des Greifers. Der Fertigungsablauf kann entsprechend beschleunigt werden. Die Querbewegung des Greifers dient vorzugsweise sowohl dazu, die weiterzubearbeitenden Stableiter an die nachfolgende Bearbeitung weiterzugeben als auch die zu prüfenden Stableiter auf die Auflagen der Messstation aufzulegen.

Der Draht kann eine Isolierschicht aufweisen, die nach dem Geraderichten bereichsweise entfernt wird. Vorzugsweise wird der Draht in den abisolierten Bereichen zerteilt. Die abisolierten Enden der Stableiter können nach dem Einsetzen in einen Grundkörper eines Stators mit den Enden anderer Stableiter verschweißt werden.

Vorzugsweise werden die weiterzuverarbeitenden Stableiter bei der nachfolgenden Bearbeitung gebogen, sodass U-förmig gebogene Stableiter erhalten werden. U-förmige Stableiter brauchen zur Herstellung einer Spulenwicklung nur an einem axialen Ende des Stators mit anderen Stableitern verschweißt zu werden.

### Erfindungsgemäße Fertigungsanlage

In den Rahmen der vorliegenden Erfindung fällt auch eine Fertigungsanlage für Stableiter. Die Fertigungsanlage ermöglicht die Durchführung des oben beschriebenen, erfindungsgemäßen Verfahrens. Vorzugsweise ist die Fertigungsanlage zur automatischen Durchführung des oben beschriebenen, erfindungsgemäßen Verfahrens eingerichtet.

Die Fertigungsanlage weist Folgendes auf:
- wenigstens eine Herstellmaschine für Stableiter mit einer Abrolleinrichtung zum Abwickeln von Draht von einer Spule, mit einer Richteinrichtung zum Geraderichten des abgewickelten Drahts, mit einer Abisoliereinrichtung zum bereichsweisen Entfernen einer Isolierschicht von dem Draht, und mit einer Trenneinrichtung zum Zerteilen des Drahtes, sodass einzelne Stableiter erhalten werden;
- und eine Messstation mit zwei voneinander beabstandeten Auflagen und mit einer Messeinrichtung zum Bestimmen einer Durchbiegung eines auf die Auflagen aufgelegten Stableiters.

Die Abrolleinrichtung kann einen Antrieb für die Spule aufweisen. Alternativ oder zusätzlich kann die Abrolleinrichtung ein Abwickeln durch Ziehen am Draht ermöglichen.

Die Richteinrichtung umfasst typischerweise mehrere Richtrollen, zwischen denen der Draht hindurchgeführt werden kann. Mit anderen Worten sind mehrere Richtrollen alternierend auf unterschiedlichen Seiten des Drahts angeordnet. Die Richtrollen sind vorzugsweise auf vier Seiten angeordnet, um einen Draht mit einem Rechteckquerschnitt in seinen beiden Querrichtungen geradezurichten.

Die Abisoliereinrichtung kann einen Laser zum Abschmelzen und/oder Verdampfen der Isolierschicht aufweisen. Alternativ kann die Abisoliereinrichtung ein oder mehrere Stanzwerkzeuge aufweisen, um die Isolierschicht vom Draht abzuschneiden. Vorzugsweise sind vier Sätze von je zwei Stanzwerkzeugen vorgesehen, um die Isolierschicht von den vier Flachseiten und den Kanten des im Querschnitt rechteckigen Drahtes abzuschneiden.

Die Trenneinrichtung kann ein Messer und einen Amboss aufweisen. Das Zerteilen erfolgt typischerweise in Bereichen, in denen die Isolierschicht entfernt wurde, insbesondere mittig in den abisolierten Bereichen. Durch das Zerteilen des Drahtes werden einzelne gerade (ungebogene) Stableiter erhalten.

Die Messstation ermöglicht eine präzise Beurteilung der Geradheit der Stableiter. Die Auflagen sind grundsätzlich auf gleichen vertikalen Höhen, d. h. in einer gemeinsamen horizontalen Ebene, angeordnet. Die auf die Auflagen aufgelegten Stableiter biegen sich unter ihrem Eigengewicht durch. Diese Durchbiegung kann mittels der Messeinrichtung bestimmt werden. Die Abweichung der gemessenen Durchbiegung von einer nominellen Durchbiegung eines perfekt geraden Stableiters stellt ein Maß für die Geradheit des jeweiligen Stableiters dar.

Eine Steuereinrichtung der Fertigungsanlage kann dazu eingerichtet sein, die ermittelte Durchbiegung eines Stableiters mit der nominellen Durchbiegung eines perfekt geraden Stableiters zu vergleichen. Die nominelle Durchbiegung kann in der Steuereinrichtung hinterlegt sein. Vorzugsweise ist die Steuereinrichtung dazu eingerichtet, die nominelle Durchbiegung durch beidseitige Messung an wenigstens einem Stableiter selbst zu ermitteln.

Die Fertigungsanlage ermöglicht das Herstellen von geraden Stableitern (I-Pins) aus aufgewickeltem Draht, insbesondere Draht mit Rechteckquerschnitt, wobei mittels der Messstation eine Qualitätskontrolle durchgeführt werden kann.

Vorzugsweise ist die Messeinrichtung zur berührungslosen Ermittlung der Durchbiegung eines auf die Auflagen aufgelegten Stableiters eingerichtet, insbesondere wobei die Messeinrichtung eine Lasermesseinrichtung ist. Die Durchbiegungen können bei einer berührungslosen Messung nicht durch den Kontakt zwischen einer Messeinrichtung und dem jeweiligen Stableiter verfälscht werden. Dies erhöht die Genauigkeit des Verfahrens. Zudem kann berührungslos besonders schnell gemessen werden. Lasermesseinrichtungen arbeiten besonders präzise.

Die Messeinrichtung kann höhenverstellbar sein. Zum Auflegen der Stableiter auf die Auflagen bzw. für ein Bewegen der Auflagen mit einem aufgelegten Stableiter kann die Messeinrichtung abgesenkt werden, sodass sie bei der Handhabung der Stableiter nicht stört. Zum Bestimmen der Durchbiegungen wird die Messeinrichtung dann jeweils angehoben.

Besonders bevorzugt ist zwischen den Auflagen ein in vertikaler Richtung (relativ zu den Auflagen) feststehendes Referenzstück angeordnet. Typischerweise steht das Referenzstück in allen Richtungen fest. Insbesondere wenn eine höhenverstellbare Messeinrichtung zum Bestimmen der Durchbiegungen vorgesehen ist, kann durch das Referenzstück die Genauigkeit verbessert werden. Zum Ermitteln der Durchbiegungen kann ein Abstand zwischen dem Referenzstück und dem jeweiligen Stableiter bestimmt werden. Die Durchbiegungen können insbesondere als eine Differenz des (bekannten und unveränderlichen) Abstandes zwischen dem Referenzstück und den Auflagen sowie des Abstandes zwischen dem Referenzstück und dem jeweiligen Stableiter bestimmt werden. Das Referenzstück befindet sich typischerweise unterhalb eines auf die Auflagen aufgelegten Stableiters. Dadurch stört das Referenzstück nicht bei der Handhabung des Stableiters.

Vorzugsweise weist die Fertigungsanlage eine Wendeeinrichtung auf zum Drehen eines auf die Auflagen aufgelegten Stableiters um seine Längsachse. Mittels der Wendeeinrichtung kann der Stableiter gedreht werden, um die nominelle Durchbiegung anhand der beiden Durchbiegungen bei Auflage gegenüberliegender (Flach-)Seiten des Stableiters zu ermitteln. Zudem kann der Stableiter mittels der Wendeeinrichtung für eine Geradheitsprüfung in zwei Ebenen ausgerichtet werden.

Die Wendeeinrichtung kann dazu eingerichtet sein, die Stableiter beim Drehen anzuheben. Dadurch wird die mechanische Belastung der Stableiter beim Drehen reduziert. Zudem kann vermieden werden, dass die Stableiter von den Auflagen herabrollen.

Bevorzugt ist die Wendeeinrichtung in Längsrichtung verfahrbar. Durch Verfahren in der Längsrichtung kann die Wendeeinrichtung an den jeweiligen Stableiter gekoppelt werden bzw. von dem Stableiter entfernt werden. Die Wendeeinrichtung kann eine an die Querschnittsform der Stableiter angepasste Aufnahme zum Aufschieben auf die Stableiter aufweisen. Zudem kann die Wendeeinrichtung den Stableiter durch Verfahren in der Längsrichtung an einem Anschlag zur Anlage bringen.

Besonders bevorzugt weist die Fertigungsanlage einen Stellantrieb auf zum Einstellen einer Position zumindest einer Richtrolle der Richteinrichtung, vorzugsweise der in Durchlaufrichtung des Drahtes vorletzten Richtrolle (für eine Richtebene). Dies ermöglicht es, eine Einstellung der Richteinrichtung in Abhängigkeit von der bestimmten Geradheit der Stableiter automatisch zu korrigieren. Vorzugsweise ist die Steuereinrichtung der Fertigungsanlage dazu eingerichtet, den Stellantrieb anzusteuern, um die Geradheit der Stableiter zu verbessern.

Die Fertigungsanlage kann eine Sortiermaschine aufweisen mit einem um eine Drehachse drehbaren Rotor, der mehrere in Umfangsrichtung gegeneinander versetzte Aufnahmen für je einen Stableiter aufweist. Die Sortiermaschine ermöglicht es, Stableiter mit erkannten Fehlern von der Weiterbearbeitung auszuschließen und Stableiter ohne erkannte Fehler der Weiterbearbeitung zuzuführen, insbesondere in eine Speichereinrichtung einzubringen. Solche Fehler können beispielsweise Fehlstellen einer Isolierschicht sein, die auf optischem Wege erkannt wurden, insbesondere anhand einer Farbmarkierung, die in einem vorherigen Bearbeitungsschritt angebracht wurde.

Bevorzugt sind die Auflagen der Messstation zwischen einer Aufnahmestelle bei dem Rotor und einer Messstelle bei der Messeinrichtung bewegbar. Sowohl zu prüfende wie auch weiterzuverarbeitende und ggf. auch auszusortierende Stableiter können somit zu der Aufnahmestelle verbracht werden, was das Weiterleiten der Stableiter von der Trenneinrichtung vereinfacht. Die Aufnahmen können insbesondere in horizontaler Richtung verschieblich sein und beispielsweise an einem gemeinsamen Schiebeelement gehalten sein.

Vorzugsweise ist vorgesehen, dass die Messstation einen Zwischenspeicher für Stableiter aufweist, und dass die Messstationen eine Fördereinrichtung aufweist, um Stableiter von den Auflagen in den Zwischenspeicher zu verbringen. Derart kann zumindest zeitweise ein autarker Betrieb der Messstation (ohne Eingriffe von Bedienpersonal) ermöglicht werden. Die Fördereinrichtung vereinfacht es, einen geprüften Stableiter von den Auflagen zu entfernen. Insbesondere kann die Fördereinrichtung dazu eingerichtet sein, die Stableiter automatisch in den Zwischenspeicher zu überführen. Der Zwischenspeicher ermöglicht es, einige (typischerweise wenigstens zehn) Stableiter nach der Geradheitsprüfung bei der Messstation zwischenzulagern. Aus dem Zwischenspeicher können die Stableiter manuell und/oder automatisiert entnommen werden.

Die Fertigungsanlage kann einen Greifer aufweisen, um Stableiter von einer Übergabestelle wahlweise einer nachfolgenden Bearbeitung zuzuführen, insbesondere in eine Speichereinrichtung der Fertigungsanlage einzubringen, oder auf die Auflagen der Messstation aufzulegen. Der Greifer kann zudem dazu verwendet werden, fehlerhafte Stableiter aus dem Fertigungsablauf auszuschleusen. Der Greifer kann somit einen jeden der Stableiter an der Übergabestelle ergreifen und ihn in Abhängigkeit von dessen Bestimmung an eine entsprechend vorgesehene Stelle verbringen. Dies ermöglicht eine rationelle Prozessführung.

Die Fertigungsanlage kann eine Speichereinrichtung, insbesondere eine Kassette, aufweisen. Die Weitergabe der weiterzubearbeitenden Stableiter kann an die Speichereinrichtung erfolgen. In der Speichereinrichtung können mehrere Stableiter gesammelt und gemeinsam der Weiterverarbeitung zugeführt werden. Anders als bei der unmittelbaren Übergabe einzelner Stableiter an einen Folgeprozess werden durch das Sammeln der Stableiter in der Speichereinrichtung Unterbrechungen des Folgeprozesses vermieden, wenn einer der Stableiter ausgeschleust wird und somit nicht für die Weiterbearbeitung zur Verfügung steht. Indem mehrere Stableiter in der Speichereinrichtung gesammelt und gemeinsam weitergegeben werden, wird ein Puffer für den Folgeprozess geschaffen.

Vorzugsweise ist der Greifer quer zur Längsrichtung der Stableiter verfahrbar, insbesondere an einem Portal. Dies ermöglicht einen in Längsrichtung kompakten Aufbau der Fertigungsanlage. Zudem werden die erforderlichen Bewegungen des Greifers verringert. Der Fertigungsablauf kann entsprechend beschleunigt werden. Die Querbewegung des Greifers dient vorzugsweise sowohl dazu, die weiterzubearbeitenden Stableiter an die nachfolgende Bearbeitung weiterzugeben als auch die zu prüfenden Stableiter auf die Auflagen aufzulegen.

Die Fertigungsanlage kann einen Querförderer aufweisen mit mehreren Halteeinrichtungen für einen oder mehrere Stableiter, wobei die Halteeinrichtungen quer zur Längsrichtung der Stableiter bewegbar sind, um die Stableiter einzeln oder zu mehreren zu der Übergabestelle zu verbringen. Der Querförderer kann die Verkettung des Transports der Stableiter vereinfachen. Zudem können die Halteeinrichtungen des Querförderers als Puffer verwendet werden, um eine Gruppe von mehreren Stableitern zu sammeln, die nur gemeinsam und in einer bestimmten Reihenfolge weiterverarbeitet werden dürfen. Falls einer dieser Stableiter fehlerhaft ist, muss die ganze Gruppe aussortiert werden. Dies ist unter Verwendung des Querförderers möglich.

Die Fertigungsanlage kann mehrere Herstellmaschinen aufweisen, denen eine einzige Messstation zugeordnet ist. Die Auslastung der Messstation kann dadurch verbessert werden. Eine einzige Messstation kann beispielsweise mit wenigstens drei, bevorzugt wenigstens fünf Herstellmaschinen verknüpft sein. Typischerweise sind nicht mehr als zwanzig Herstellmaschinen für eine einzige Messstation vorgesehen.

Die Fertigungsanlage kann wenigstens eine Biegemaschine aufweisen. Mit der Biegemaschine können die geraden Stableiter zu U-förmigen Stableitern (Hair-Pins) gebogen werden. Mit U-förmig gebogenen Stableitern sind weniger Schweißvorgänge zur Herstellung einer Spulenwicklung erforderlich als mit geraden Stableitern.

Vorzugsweise sind für jede Herstellmaschine mehrere Biegemaschinen vorhanden. Eine Taktzeit der Biegemaschine ist typischerweise größer als eine Taktzeit der Herstellmaschinen. Die Leistungsfähigkeit der Herstellmaschine kann somit mit mehreren Biegemaschinen besser ausgenutzt werden. Für jede Herstellmaschine können wenigstens drei, insbesondere wenigstens fünf, Biegemaschinen vorgesehen sein. Typischerweise sind höchstens zehn Biegemaschinen pro Herstellmaschine vorhanden.

Weitere Merkmale und Vorteile der Erfindung ergeben sich aus der Beschreibung, den Ansprüchen und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen beschrieben. Es zeigen:
- Fig. 1: eine Prinzipdarstellung einer erfindungsgemäßen Fertigungsanlage mit einer Messstation und einer Sortiermaschine bei der Durchführung eines erfindungsgemäßen Herstellverfahrens;
- Fig. 2: einen Stableiter mit Rechteckquerschnitt in einer schematischen Perspektivansicht;
- Fig. 3: eine Prinzipskizze des Bestimmens einer Durchbiegung eines auf zwei Auflagen aufgelegten Stableiters unter Verwendung eines Referenzstücks, für die Erfindung;
- Fig. 4a: ein schematisches Ablaufdiagramm einer ersten Variante eines Verfahrens zur Geradheitsbestimmung, für die Erfindung;
- Fig. 4b: ein schematisches Ablaufdiagramm einer zweiten Variante eines Verfahrens zur Geradheitsbestimmung, für die Erfindung;
- Fig. 5: eine Richteinrichtung der Fertigungsanlage von Figur 1 in einer schematischen Seitenansicht;
- Fig. 6: eine erste Messstation für die Erfindung, aufweisend zwei verfahrbare Auflagen und eine höhenverstellbare Messeinrichtung, in einer schematischen Perspektivansicht;
- Fig. 7: die Messstation von Figur 6 beim Auflegen eines Stableiters, wobei die Auflagen an eine Aufnahmestelle bei einem Rotor einer Sortiermaschine verschoben sind, in einer schematischen Perspektivansicht;
- Fig. 8: eine höhenverstellbare Wendeeinrichtung für die Messstation von Figur 6, in einer schematischen Perspektivansicht;
- Fig. 9: eine Fördereinrichtung und eine Speichereinrichtung der Messstation von Figur 6; in einer schematischen Seitenansicht;
- Fig. 10: eine zweite Messstation für die Erfindung, aufweisend eine in Längsrichtung bewegliche Wendeeinrichtung, in einer schematischen Perspektivansicht;
- Fig. 11: die Wendeeinrichtung der Messstation von Figur 10 in einer schematischen Perspektivansicht;
- Fig. 12: die Wendeeinrichtung der Messstation von Figur 10 in einer schematischen Schnittansicht;
- Fig. 13: einen Ausschnitt einer Fertigungsanlage für Stableiter, umfassend die Messstation von Figur 10 und einen Querförderer, in einer schematischen Perspektivansicht;
- Fig. 14: eine dritte Messstation für die Erfindung, aufweisend eine feststehende und eine verschiebliche Auflage sowie eine mechanisch zwischen den Auflagen zentrierte Messeinrichtung, in einer schematischen Perspektivansicht;
- Fig. 15: einen Ausschnitt der Messstation von Figur 14 im Bereich der verschieblichen Auflage, in einer vergrößerten schematischen Perspektivansicht;
- Fig. 16: die Messeinrichtung der Messstation von Figur 14 in einer schematischen Schnittansicht durch die Messeinrichtung;
- Fig. 17: eine Fertigungsanlage mit mehreren Herstellmaschinen für gerade Stableiter, einer gemeinsamen Messstation und mehreren Biegemaschinen für jede der Herstellmaschinen, in einer Prinzipskizze.

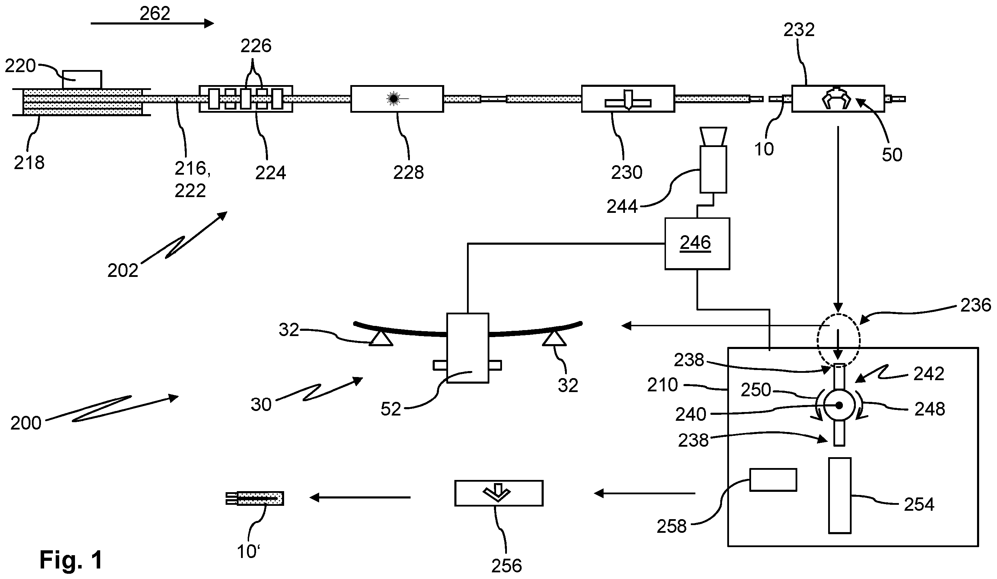

**Figur 1** zeigt eine Fertigungsanlage **200** für Stableiter **10** ist. Die Fertigungsanlage 200 umfasst mehrere Stationen, mit denen zunächst gerade (ungebogene) Stableiter 10 hergestellt werden. Die geraden Stableiter 10 werden wahlweise zu einer Messstation **30** oder zu einer Sortiermaschine **210** verbracht. An der Messstation 30 werden die zu prüfenden Stableiter 10 auf Geradheit geprüft. Von der Sortiermaschine 210 werden die Stableiter 10 in weiterzubearbeitende und auszuschleusende Stableiter 10 sortiert. Zur Weiterverarbeitung vorgesehene Stableiter 10 werden zu gebogenen Stableitern **10'** gebogen.

Die Stableiter 10 werden aus Draht **216,** insbesondere Kupferdraht, mit rechteckigem Querschnitt hergestellt. Der Draht 16 ist zunächst auf einer Spule **218** aufgewickelt. Mittels einer Abrolleinrichtung **220,** welche die Spule 218 antreiben kann und/oder am Draht 216 ziehen kann (nicht näher dargestellt), wird der Draht 216 von der Spule 218 abgewickelt. Der auf der Spule 218 bereitgestellte Draht 216 ist durchgängig mit einer Isolierschicht **222** ummantelt.

Nach dem Abwickeln wird der Draht 216 zunächst mittels einer Richteinrichtung **224** geradegerichtet. Die Richteinrichtung 224 umfasst hier mehrere auf unterschiedlichen Seiten des Drahtes 216 angeordnete Richtrollen **226.**

Sodann wird mittels einer Abisoliereinrichtung **228** bereichsweise die Isolierschicht 222 vom Draht 216 entfernt. Die Abisoliereinrichtung 228 kann einen Laser zum Verdampfen bzw. Abschmelzen der Isolierschicht 222 aufweisen.

In den abisolierten Bereichen wird der Draht 216 daraufhin mittels einer Trenneinrichtung **230** in Stücke geteilt, sodass einzelne gerade Stableiter 10 (sogenannte I-Pins) erhalten werden.

Die Abrolleinrichtung 220, die Richteinrichtung 226, die Abisoliereinrichtung 228 und die Trenneinrichtung 230 bilden zusammen eine Herstellmaschine **202** zum Herstellen von geraden Stableitern 10.

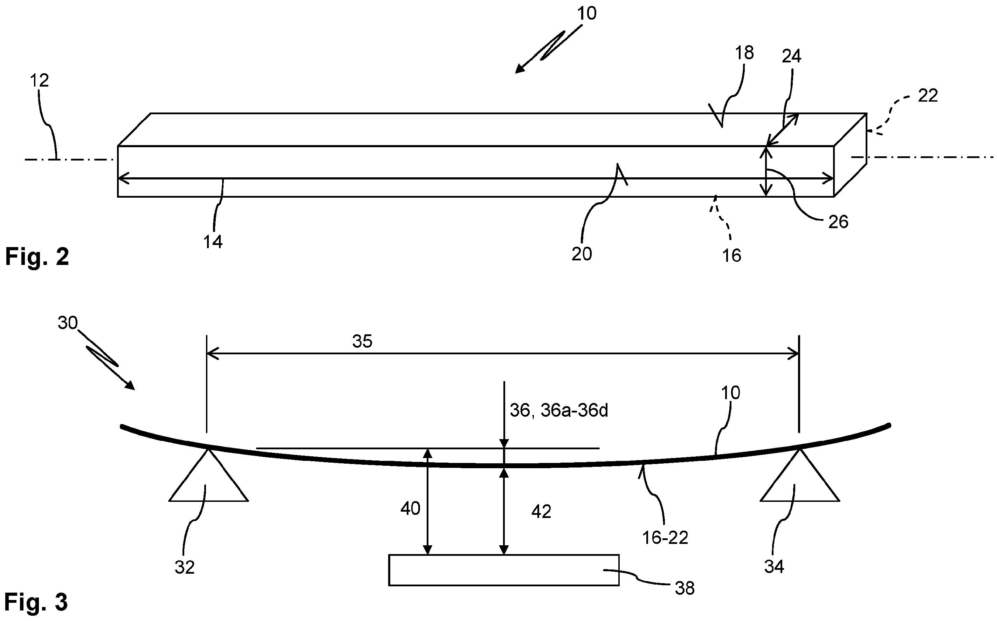

Ein gerader Stableiter 10 ist in **Figur 2** in einer Prinzipskizze dargestellt. Der Stableiter 10 erstreckt sich geradlinig entlang einer Längsachse **12.** Eine entlang der Längsachse 12 gemessene Länge **14** des Stableiters kann beispielsweise zwischen 200 mm und 800 mm betragen. Der Stableiter 10 besteht aus einer Kupferlegierung. Mit Ausnahme seiner axialen Enden weist der Stableiter 10 die hier nicht näher dargestellte Isolierschicht auf.

Der Stableiter 10 weist einen Rechteckquerschnitt auf. Eine erste Flachseite **16** liegt einer zweiten Flachseite **18** gegenüber. Die erste und die zweite Flachseite 16, 18 erstrecken sich senkrecht zu einer ersten Ebene, welche die Längsachse 12 enthält. Eine weitere erste Flachseite **20** liegt einer weiteren zweiten Flachseite **22** gegenüber. Die weitere erste und die weitere zweite Flachseite 20, 22 erstrecken sich senkrecht zu einer zweiten Ebene, welche die Längsachse 12 enthält. Die erste und die zweite Ebene verlaufen bei einem im Querschnitt rechteckigen Stableiter 10 senkrecht zueinander. Ein Abstand **24** der weiteren ersten Flachseite 20 von der weiteren zweiten Flachseite 22 kann größer sein als ein Abstand **26** der ersten Flachseite 16 von der zweiten Flachseite 18, beispielsweise um wenigstens 10 %.

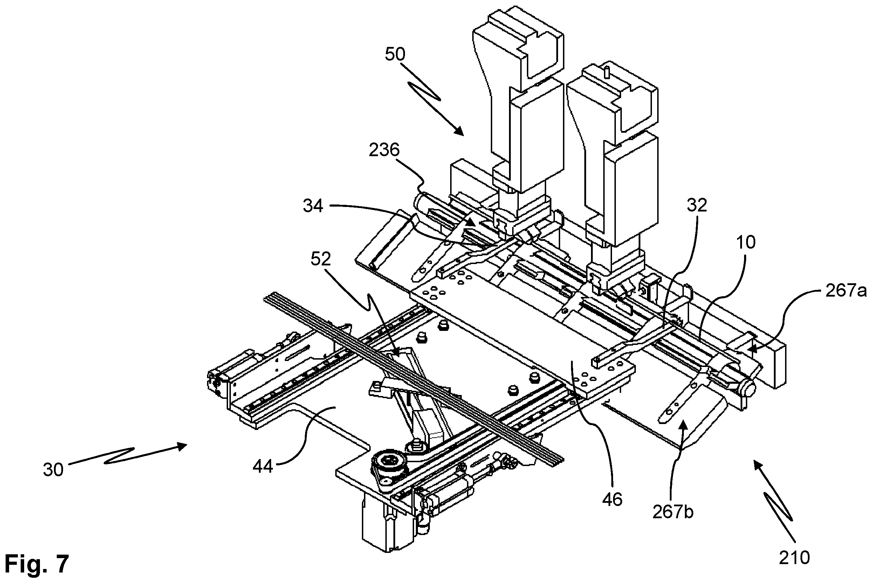

Nach dem Zerteilen des Drahtes 216, vergleiche Figur 1, werden die geraden Stableiter 10 mit einer Zuführeinrichtung **232,** die einen Greifer **50** aufweisen kann an eine Aufnahmestelle **236** verbracht. Die Zuführeinrichtung 232 legt die Stableiter an der Aufnahmestelle 236 entweder auf einer von mehreren Aufnahmen **238** der Sortiermaschine 210 oder auf beweglichen Auflagen **32** der Messstation 30 ab, vergleiche auch **Figur 7****.** In Figur 1 ist die Übergabestelle 236 der Übersichtlichkeit halber vergrößert mit einem gepunkten Oval gekennzeichnet.

Es kann vorgesehen sein, dass in vorgegebenen Abständen Stableiter 10 an die Messstation 30 übergeben werden, beispielsweise jeder zweitausendste Stableiter 10. Die übrigen Stableiter 10 werden an die Sortiermaschine 210 übergeben. Die Aufnahmen 238 der Sortiermaschine 210 sind hier an einem um eine Drehachse **240** drehbaren Rotor **242** ausgebildet. Die Auflagen 32 der Messstation sind gemeinsam verfahrbar, hier in horizontaler Richtung, vergleiche auch Figur 7 und die zugehörige Beschreibung.

Ein optischer Sensor **244** prüft die Stableiter 10 vor oder bei der Übergabe an die Sortiermaschine 210 auf Fehlstellen. Solche Fehlstellen können beispielsweise durch Farbmarkierungen gekennzeichnet sein. Der optische Sensor 244 ist mit einer Steuereinrichtung **246** verbunden.

Wenn keine Fehlstelle erkannt wurde, veranlasst die Steuereinrichtung 246 eine Drehung des Rotors 242 in einer ersten Richtung **248.** Wenn eine Fehlstelle erkannt wurde, veranlasst die Steuereinrichtung 246 eine Drehung des Rotors 242 in einer zweiten Richtung **250.**

Bei einer Drehung des Rotors 242 in der ersten Richtung 248 wird der jeweils aufgelegte Stableiter 10 an die nachfolgende Bearbeitung weitergeleitet. Hierzu können die Stableiter 10 in eine Speichereinrichtung **254** eingebracht werden.

Mit der Speichereinrichtung 254 werden die Stableiter 10 zu einer Biegemaschine **256** verbracht. Die Biegemaschine 256 biegt die bisher geraden Stableiter 10, sodass gebogene Stableiter 10' (sogenannte Hair-Pins) erhalten werden. Die gebogenen Stableiter 10' können sodann beispielsweise in einen Stator für einen Elektromotor eingesetzt werden (nicht näher dargestellt).

Bei einer Drehung des Rotors 242 in der zweiten Richtung 250 wird der jeweils aufgelegte Stableiter 10 aus dem Fertigungsprozess ausgeschleust. Die auszuschleusenden Stableiter 10 können in eine Sammelvorrichtung **258** geleitet werden. Insbesondere werden diejenigen Stableiter 10 mit einer erkannten Fehlstelle in der Sammelvorrichtung 258 als Ausschuss gesammelt.

**Figur 3** zeigt eine Prinzipskizze eines Ausschnitts einer Messstation **30** zum Bestimmen der Geradheit von Stableitern 10. Für die Geradheitsbestimmung wird jeder Stableiter 10 mit zumindest einer seiner Flachseiten 16-22 auf zwei Auflagen **32, 34** aufgelegt. Der Stableiter 10 wird dabei so angeordnet, dass entweder beide Auflagen 32, 34 sich im Bereich der abisolierten Enden des Stableiters 10 befinden oder dass sich beide Auflagen 32, 34 im Bereich mit der Isolierschicht befinden. Ein Abstand **35** der Auflagen 32, 34 ist entsprechend gewählt bzw. eingestellt. Die beiden Auflagen 32, 34 befinden sich grundsätzlich auf derselben vertikalen Höhe.

Aufgrund seines Eigengewichts biegt sich der Stableiter 10 zwischen den Auflagen 32, 34 durch, was in Figur 3 übertrieben dargestellt ist. Eine Durchbiegung **36** beschreibt, wie weit sich die auf den Auflagen 32, 34 jeweils aufliegende Flachseite 16-22 unterhalb der Ebene der Auflagen 32, 34 befindet. Diese Durchbiegung 36 ist von der Geradheit und der Orientierung des Stableiters 10, d. h. der auf den Auflagen 32, 34 jeweils aufliegenden Flachseite 16-22, abhängig. Nachfolgend werden den einzelnen Flachseiten 16-22 jeweilige Durchbiegungen 36a-36d zugeordnet.

Zur präzisen Bestimmung der Durchbiegungen 36 kann ein Referenzstück **38** verwendet werden. Das Referenzstück 38 weist einen bekannten und feststehenden vertikalen Abstand **40** von einer Auflagefläche der Auflagen 32, 34 auf. Ein Abstand **42** des Stableiters 10, d. h. der Abstand der auf den Auflagen 32, 34 aufliegenden Flachseite 16-22 des Stableiters 10, von dem Referenzstück 38 kann mit einer Figur 3 nicht näher dargestellten Messeinrichtung bestimmt werden. Die Durchbiegung 36 ergibt sich dann aus der Differenz der Abstände 40 und 42.

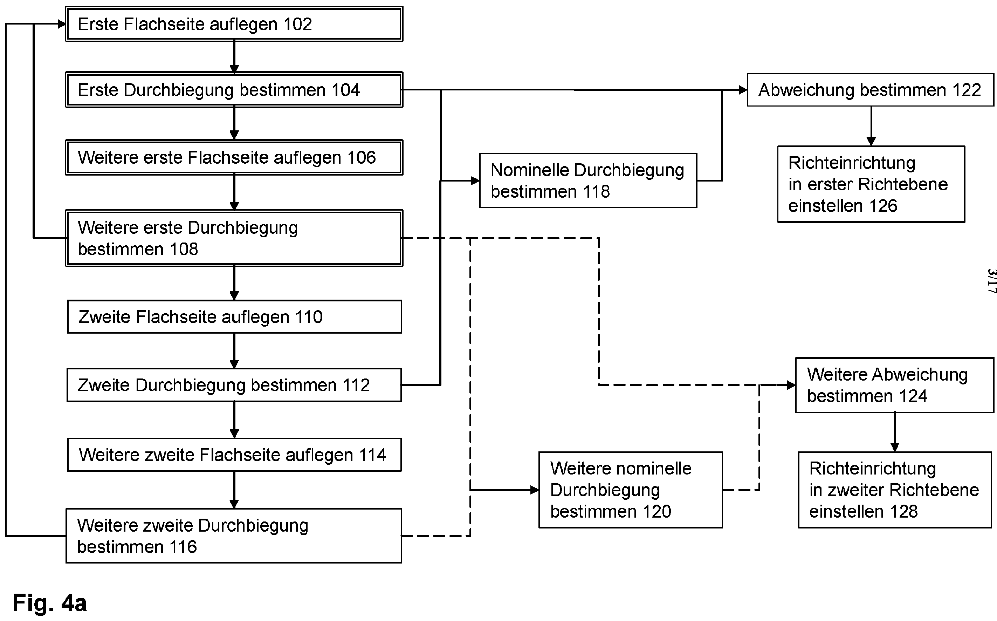

Das Vorgehen zur Geradheitsbestimmung sei anhand des in **Figur 4a** gezeigten Ablaufdiagramms beschrieben, wobei ergänzend auf die Figuren 2 und 3 und die obige Beschreibung Bezug genommen wird.

Ein jeder auf Geradheit zu prüfende Stableiter 10 wird zumindest mit seiner ersten Flachseite 16 auf die Auflagen 32, 34 aufgelegt, vergleiche Schritt **102.** Sodann wird eine erste Durchbiegung **36a** bestimmt, vergleiche Schritt **104.**

Es kann vorgesehen sein, dass die Geradheit des Stableiters 10 auch in der zweiten Ebene bestimmt werden soll. Dann wird in einem Schritt **106** die weitere erste Flachseite 20 auf die Auflagen 32, 34 aufgelegt; hierzu kann der Stableiter 10 um 90° um seine Längsachse 12 gedreht werden. Wenn die weitere erste Flachseite 20 auf den Auflagen 32, 34 aufliegt, wird eine weitere erste Durchbiegung **36c** bestimmt, vergleiche Schritt **108.**

Zumindest einer von mehreren gleichartigen, auf Geradheit zu prüfenden Stableitern 10 wird auch mit der zweiten Flachseite 18 auf die Auflagen 32, 34 aufgelegt, vergleiche Schritt **110.** Hierzu kann der Stableiter 10 um weitere 90° um seine Längsachse 12 gedreht werden. Falls keine Geradheitsbestimmung in zwei Ebenen erfolgen soll, kann der Stableiter 10 ausgehend der Auflage der ersten Flachseite 16 um 180° gedreht werden. Wenn die zweite Flachseite 18 auf den Auflagen 32, 34 aufliegt, wird eine zweite Durchbiegung **36b** bestimmt, vergleiche Schritt **112.**

Für eine Geradheitsbestimmung in zwei Ebenen wird bei zumindest einem von mehreren gleichartigen Stableitern 10 auch die weitere zweite Flachseite 22 auf die Auflagen 32, 34 aufgelegt, vergleiche Schritt **114;** hierzu kann der Stableiter 10 um weitere 90° gedreht werden. Wenn die weitere zweite Flachseite 22 auf den Auflagen 32, 34 aufliegt, wird eine weitere zweite Durchbiegung **36d** bestimmt, vergleiche Schritt **116.**

Ein Mittelwert der ersten und zweiten Durchbiegungen 36a, 36b entspricht einer nominellen Durchbiegung eines (gedachten) perfekt geraden Stableiters in der ersten Ebene, d. h. bei Auflage mit der ersten oder zweiten Flachseite. Die nominelle Durchbiegung kann anhand einer oder mehrerer gemessener erster und zweiter Durchbiegungen 36a, 36b explizit berechnet werden, vergleiche Schritt **118.**

In gleicher Weise entspricht ein Mittelwert der weiteren ersten und weiteren zweiten Durchbiegungen 36c, 36d einer weiteren nominellen Durchbiegung eines (gedachten) perfekt geraden Stableiters in der zweiten Ebene, d. h. bei Auflage mit der weiteren ersten oder weiteren zweiten Flachseite. Die weitere nominelle Durchbiegung kann anhand einer oder mehrerer gemessener weiterer erster und weiterer zweiter Durchbiegungen 36a, 36b explizit berechnet werden, vergleiche Schritt **120.**

Als ein Maß für die Geradheit in der ersten Ebene wird für einen jeden Stableiter 10 eine Abweichung seiner ersten Durchbiegung 36a von der nominellen Durchbiegung bestimmt, vergleiche Schritt **122.**

Wenn die nominelle Durchbiegung nach Vermessung eines oder mehrerer Stableiter 10 explizit bestimmt wurde, brauchen weitere auf Geradheit zu prüfende Stableiter 10 jeweils nur mit der ersten Flachseite 16 auf die Auflagen 32, 34 aufgelegt und die jeweilige erste Durchbiegung 36a bestimmt zu werden (erneute Durchführung der Schritte 102 und 104; dies ist in Figur 4a durch doppelte Umrandung angedeutet). Für die weiteren Stableiter 10 entfallen dann die Schritte 110 und 112. Die Abweichung, welche die Geradheit in der ersten Ebene beschreibt, kann als Differenz der jeweils bestimmten ersten Durchbiegung 36a und der zuvor ermittelten nominellen Durchbiegung berechnet werden.

In entsprechender Weise wird als ein Maß für die Geradheit in der zweiten Ebene für einen jeden Stableiter 10 eine weitere Abweichung seiner weiteren ersten Durchbiegung 36c von der weiteren nominellen Durchbiegung bestimmt, vergleiche Schritt **124.**

Wenn die weitere nominelle Durchbiegung nach Vermessung eines oder mehrerer Stableiter 10 explizit bestimmt wurde, brauchen weitere auf Geradheit zu prüfende Stableiter 10 jeweils nur mit der weiteren ersten Flachseite 20 auf die Auflagen 32, 24 aufgelegt und die jeweilige weitere erste Durchbiegung 36c bestimmt zu werden (erneute Durchführung der Schritte 106 und 108; dies ist in Figur 4a durch doppelte Umrandung angedeutet). Für die weiteren Stableiter 10 entfallen dann die Schritte 114 und 116. Die weitere Abweichung, welche die Geradheit in der zweiten Ebene beschreibt, kann als Differenz der jeweils bestimmten weiteren ersten Durchbiegung 36c und der zuvor ermittelten weiteren nominellen Durchbiegung berechnet werden.

Wenn die Geradheit nur in der ersten Ebene bestimmt werden soll, entfallen die Schritte 106, 108, 114, 116, 120 und 124.

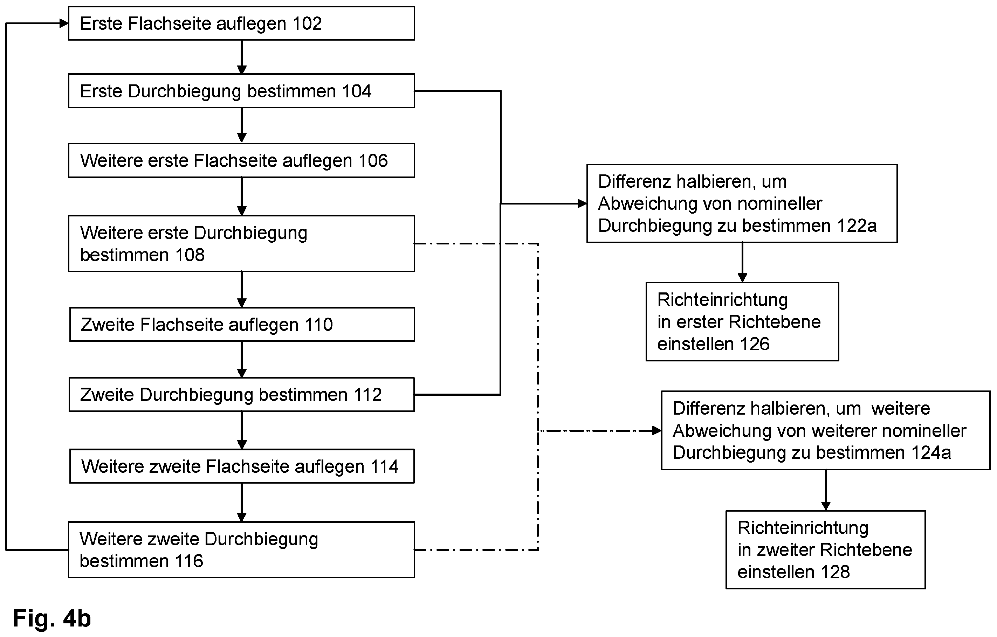

Alternativ können für jeden auf Geradheit zu prüfenden Stableiter 10 auch die zweite Durchbiegung 36b und ggf. die weitere zweite Durchbiegung 36d bestimmt werden, vergleiche **Figur 4b****.** Die nominelle Durchbiegung bzw. die weitere nominelle Durchbiegung brauchen dann nicht explizit berechnet zu werden. Es kann vielmehr für jeden Stableiter 10 individuell, als ein Maß für die die Geradheit in der ersten Ebene, die Abweichung der ersten Durchbiegung 36a von der nominellen Durchbiegung durch Halbieren der Differenz zwischen der ersten Durchbiegung 36a und der zweiten Durchbiegung 36b berechnet werden, vergleiche Schritt **122a.** Entsprechend kann für jeden Stableiter 10 individuell, als Maß für die die Geradheit in der zweiten Ebene, die Abweichung der weiteren ersten Durchbiegung 36c von der weiteren nominellen Durchbiegung durch Halbieren der Differenz zwischen der weiteren ersten Durchbiegung 36c und der weiteren zweiten Durchbiegung 36d berechnet werden, vergleiche Schritt **124a.**

Wenn die Geradheit nur in der ersten Ebene bestimmt werden soll, entfallen die Schritte 106, 108, 114, 116 und 124a.

Wenn die in den Schritten 122 bzw. 122a bestimmte Abweichung von der nominellen Durchbiegung einen vordefinierten Grenzwert überschreitet, kann in einem Schritt **126** eine Einstellung der Richteinrichtung 224 (vergleiche Figur 1) korrigiert werden. Sofern die Richteinrichtung 224 in zwei Richtebenen arbeitet, kann in entsprechender Weise in einem Schritt **128** eine Einstellung der Richteinrichtung für die zweite Richtebene korrigiert werden, wenn die in den Schritten 124 bzw. 124a bestimmte Abweichung von der weiteren nominellen Durchbiegung einen vordefinierten weiteren Grenzwert überschreitet.

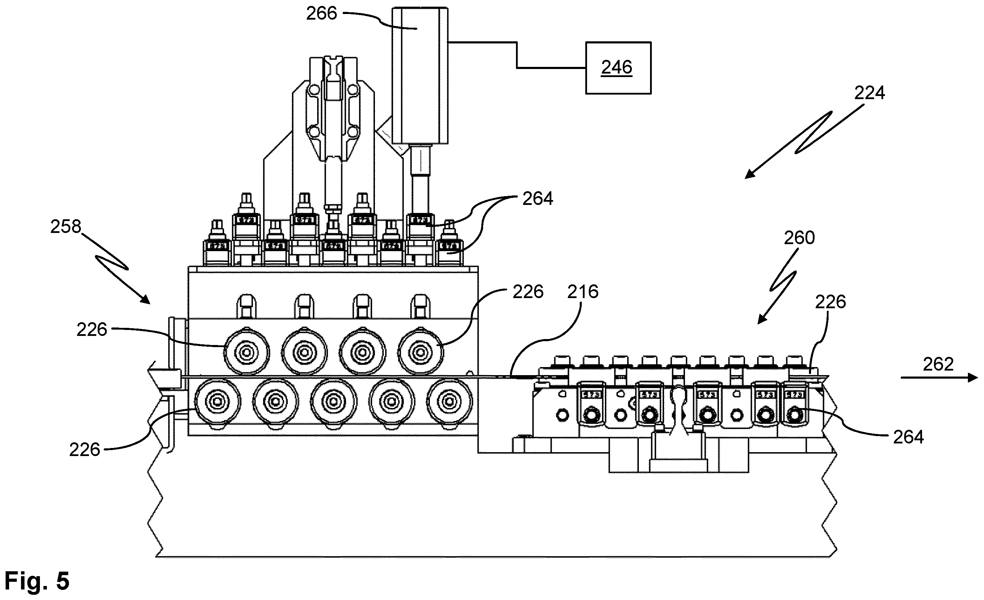

Eine in zwei Richtebenen arbeitende Richteinrichtung 224 ist in **Figur 5** dargestellt. Die Richteinrichtung 224 umfasst für jede der Richtebenen je einen Satz **258, 260** von Richtrollen 226. Die Richtrollen 226 der beiden Sätze 258, 260 sind jeweils alternierend auf unterschiedlichen Seiten des Drahtes 216 angeordnet. Aufeinanderfolgende Richtrollen 226 der beiden Sätze 258, 260 berühren jeweils gegenüberliegende Flachseiten 16-22 des Drahtes 226. Der erste Satz 258 ist hier der ersten und zweiten Flachseite 16, 18 zugeordnet, um den Draht 216 in der ersten Ebene geradezurichten; der zweite Satz 260 ist der weiteren ersten und weiteren zweiten Flachseite 20, 22 zugeordnet, um den Draht 216 in der zweiten Ebene geradezurichten. Der in einer Durchlaufrichtung **262** durch die Richteinrichtung 224 geführte Draht 216 wird von den Richtrollen 226 wechselseitig gebogen, sodass eine vorhandene Krümmung in den beiden Ebenen zunehmend verschwindet.

Die Positionen zumindest einiger der Richtrollen 226, vorzugsweise aller Richtrollen 226, sind relativ zueinander einstellbar. Vorliegend können die Richtrollen 226 zu dem Draht 216 hin und von dem Draht 216 weg bewegt werden. Hierzu sind Stelleinrichtungen **264,** beispielsweise Stellschrauben, für die einzelnen Richtrollen 226 vorgesehen. Zählwerke können eine Einstellung der jeweiligen Richtrolle 226 anzeigen.

Die Korrektur der Einstellung kann manuell erfolgen. Typischerweise wird eine Grundeinstellung der Richteinrichtung 224 manuell vorgenommen.

Vorliegend ist eine automatische Korrektur der Einstellung der in Durchlaufrichtung 262 vorletzten Richtrolle 226 des ersten Satzes 258 vorgesehen. Hierzu ist ein Stellantrieb **266** mit der zugehörigen Stelleinrichtung 264 verbunden. Wenn beim Prüfen der Geradheit der Stableiter 10 eine übermäßig große Krümmung in der ersten Ebene festgestellt wird, steuert die Steuereinrichtung 246 den Stellantrieb 266 an, um die Krümmung zu verringern.

In entsprechender Weise kann eine automatische Korrektur der Einstellung der in Durchlaufrichtung 262 vorletzten Richtrolle 226 des zweiten Satzes 260 erfolgen (nicht näher dargestellt). Oft genügt jedoch eine automatische Korrektur in der erste Ebene, in welcher der Draht 216 auf der Spule 218 die größte Krümmung aufwies (d. h. der zur Spulenachse senkrechten Ebene).

Es versteht sich, dass nicht nur die Einstellung der jeweils vorletzten Richtrolle 226 korrigiert werden kann. Auch eine andere Richtrolle 226 oder weitere Richtrollen 226 des ersten Satzes 258 oder beider Sätze 258, 260 können mit Stellantrieben versehen sein, sodass ihre jeweilige Einstellung automatisch korrigiert werden kann.

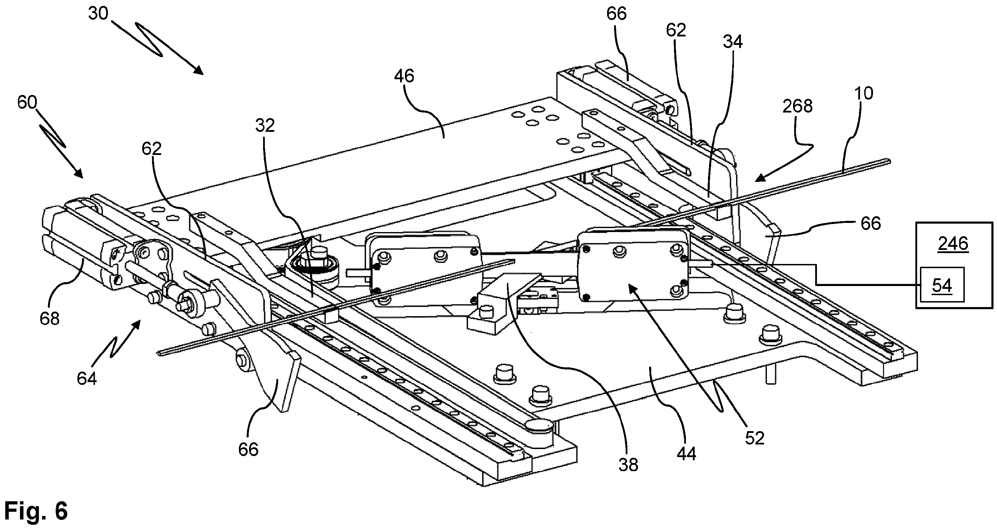

**Figur 6** zeigt eine Messstation 30 zum Bestimmen der Geradheit von Stableitern 10 in der oben beschriebenen Weise. Die Messstation kann Teil der in Figur 1 gezeigten Fertigungsanlage 200 sein. Die Messstation 30 weist einen Grundkörper **44** auf. An dem Grundkörper 42 ist ein Referenzstück 38 unverschieblich gehalten. Ein Greifer 50, mit hier zwei Greifzangen, dient dazu, wahlweise einen Stableiter 10 auf die Auflagen 32, 34 der Messstation 30 aufzulegen oder den Stableiter 10 zum Sortieren an die Sortiermaschine 48 zu übergeben, vergleiche Figur 7.

Zwei Auflagen 32, 34 der Messeinrichtung 30 sind hier an Kragarmen ausgebildet. Die beiden Auflagen 32, 34 sind voneinander beabstandet an einem Schiebeelement **46** angeordnet. Mittels des Schiebeelements 46 können die beiden Auflagen 32, 34 gemeinsam in horizontaler Richtung relativ zu dem Grundkörper 44 mit dem Referenzstück 38 verschoben werden.

In Figur 7 sind die Auflagen 32, 24 zu der Sortiermaschine 210 an eine Aufnahmestelle 236 vorgeschoben. Ein drehbarer Rotor 242 der Sortiermaschine 210 weist hier drei in Umfangsrichtung voneinander beabstandete Flügel mit je einer Aufnahme 238 für einen Stableiter 10 auf. Wenn die Auflagen 32, 34 der Messstation 30 an die Aufnahmestelle 236 verfahren werden sollen, wird der Rotor 242 in eine solche Drehstellung gebracht, dass sich keine der Aufnahmen 242 an der Aufnahmestelle 236 befindet. Nachdem die Auflagen 32, 34 an die Aufnahmestelle 236 vorgeschoben wurden, kann ein zu prüfender Stableiter 10 mittels des Greifers 50 auf die Auflagen 32, 34 gelegt werden.

Der Rotor 242 könnte statt drei Flügeln auch nur zwei einander gegenüberliegende Flügel mit je einer Aufnahme 238 aufweisen, vergleiche Figur 1.

Beim Auflegen eines Stableiters 10 auf eine der Aufnahmen 238 der Sortiermaschine 210 sind die Auflagen 32, 34 der Messstation 30 von der Aufnahmestelle 236 entfernt (vergleiche Figur 6). Der Rotor 242 wird so gedreht, dass sich eine seiner Aufnahmen 238 an der Aufnahmestelle 236 befindet (vergleiche Figur 1). Der Stableiter 10 kann dann, wie oben beschrieben, durch Drehen des Rotors 242 in der ersten Richtung 248 oder der zweiten Richtung 250 einer Weiterbearbeitung zugeführt oder aus dem Fertigungsablauf entfernt werden.

Beim Drehen des Rotors 242 in der ersten Richtung 248 werden die Stableiter 10 mittels einer Führungseinrichtung **267a,** die eine Führungsnut umfassen kann, zu der Sammeleinrichtung 254 geleitet, vergleiche Figur 1 und Figur 7. Beim Drehen des Rotors 242 in der zweiten Richtung 250 wird ein jeweiliger Stableiter 10 von einer Ausschleuseinrichtung **267b,** die eine Rutsche mit Schienensegmenten zum Untergreifen des Stableiters 10 umfassen kann, von den Aufnahmen 238 entnommen und zu der Sammeleinrichtung 258 geleitet.

In Figur 6 befinden sich die Aufnahmen 32, 34 mit dem aufgelegten Stableiter 10 an einer Messstelle **268.** Der Stableiter 10 erstreckt sich oberhalb des Referenzstücks 38 durch einen (schematisch angedeuteten) Messbereich einer Messeinrichtung **52.**

Die Messeinrichtung 52 ist hier als eine Lasermesseinrichtung ausgebildet. Die Messeinrichtung ist relativ zu dem Grundkörper 44 in vertikaler Richtung höhenverstellbar, vergleiche Figuren 6 und 7. In Figur 6 befindet sich die Messeinrichtung 52 in einer angehobenen Stellung, in welcher sie die Durchbiegung des auf die Auflagen 32, 40 aufgelegten Stableiters 10 unter Bezugnahme zu dem Referenzstück 38 berührungslos messen kann, vergleiche auch Figur 3 und die vorstehende Beschreibung. In Figur 7 ist die Messeinrichtung 52 abgesenkt, sodass das Schiebeelement 46 mit den Auflagen 32, 34 und ein aufgelegter Stableiter 10 über die Messeinrichtung 52 hinweg zwischen der Aufnahmestelle 236 und der Messstelle 268 verfahren werden können. Das feststehende Referenzstück 38 befindet sich unterhalb der Verfahrebenen des Schiebeelements 46 bzw. des aufgelegten Stableiters 10.

Die Messeinrichtung 52 ist mit einer Auswerteeinrichtung **54** verbunden, vergleiche Figur 6. Die Auswerteeinheit 54 ist dazu eingerichtet, in der oben beschriebenen Weise die Geradheit des Stableiters 10 zu bestimmen. Hierzu wertet die Auswerteeinrichtung 54 Messergebnisse der Messeinrichtung 52 aus. Zudem kann die Auswerteeinrichtung 54 die Messeinrichtung 52 und das Schiebeelement 46 mit den Aufnahmen 32, 34 steuern. Die Auswerteeinrichtung 54 kann mit der Steuereinrichtung 246 der Fertigungsanlage 200 verbunden und insbesondere in diese integriert sein. Die Steuereinrichtung 246 kann erforderlichenfalls die Richteinrichtung 224 einstellen.

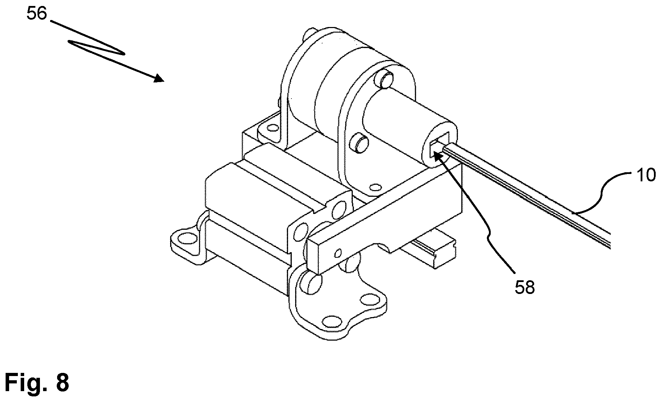

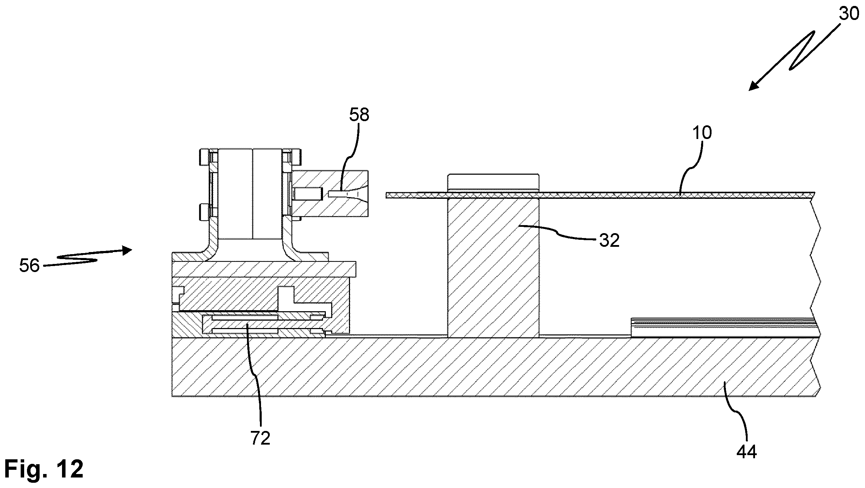

Um einen an der Messstelle 268 angeordneten Stableiter 10 um seine Längsachse zu drehen, kann eine in **Figur 8** dargestellte Wendeeinrichtung **56** vorgesehen sein. Die Wendeeinrichtung 56 weist eine drehbare Aufnahme **58** auf, welche einenends auf den Stableiter 10 aufgeschoben werden kann und diesen vorzugsweise formschlüssig greift. Die Wendeeinrichtung 56 kann hierzu in Längsrichtung des Stableiters 10 verschoben werden. Dabei kann der Stableiter 10 anderenends an einem nicht näher dargestellten Anschlag anliegen. Bei der dargestellten Ausführungsform ist die Wendeeinrichtung 56 höhenverstellbar, um den Stableiter 10 beim Drehen anzuheben. Dadurch wird vermieden, dass der Stableiter 10 beim Drehen von den Auflagen 32, 34 rollt. Vorliegend weist die Wendeeinrichtung 56 eine konisch ausgeformte Aufnahme 58 auf, die den Stableiter 10 bei der linearen Zustellung über die jeweils untere Schräge der Aufnahme 58 anhebt (vgl. auch **Figur 12**). Alternativ kann der Stableiter 10 aber auch über eine aktive Hubeinheit (nicht dargestellt) angehoben werden. Die Wendeeinrichtung 56 kann von der Auswerteeinrichtung 54 angesteuert werden, um unterschiedliche Flachseiten 16-22 des Stableiters 10 auf den Auflagen 32, 34 zur Anlage zu bringen.

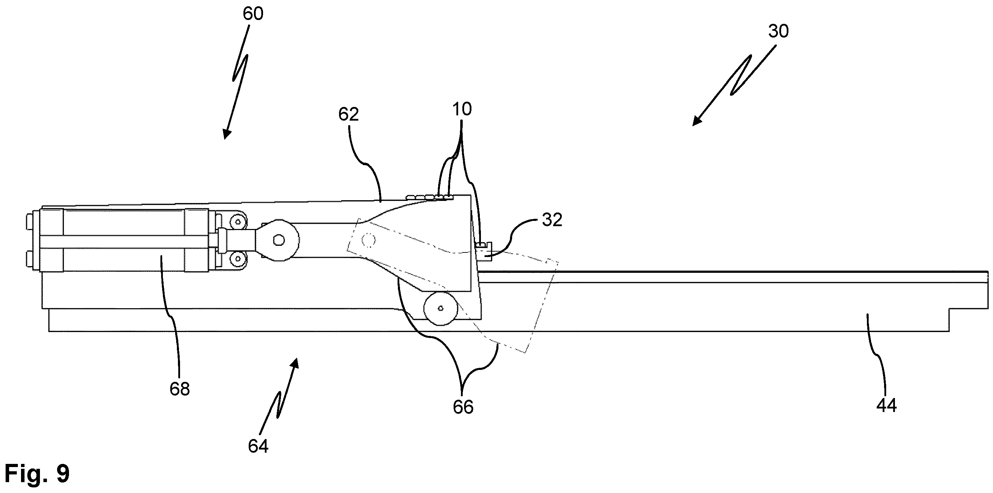

Die Messstation 30 weist hier ferner einen Zwischenspeicher **60** für auf Geradheit geprüfte Stableiter 10 auf, siehe auch **Figur 9****.** Der Zwischenspeicher 60 ist mit zwei Auflagenleisten **62** gebildet, welche sich seitlich des Schiebeelements 46 erstrecken, vergleiche Figur 6. Eine Fördereinrichtung **64** kann jeweils einen Stableiter 10 von den Auflagen 32, 34 in den Zwischenspeicher 60 heben. Die Fördereinrichtung 64 weist zwei Hakenarme **66** auf. Die Hakenarme 66 sind an den Auflageleisten 62 beweglich geführt. Beim Prüfen eines jeweiligen Stableiters 10 befinden sich die Hakenarme 66 in einer in Figur 9 strichpunktiert dargestellten, vorgeschobenen Position. Um den jeweiligen Stableiter 10 von den Auflagen 32, 34 in den Zwischenspeicher 60 zu verbringen, werden die Hakenarme 66 in eine in Figur 9 mit durchgezogenen Linien dargestellte zurückgezogene Position zurückgezogen. Beim Zurückziehen der Hakenarme 66 wird der Stableiter 10 zunächst angehoben. Sodann wird der Stableiter im Wesentlichen in horizontaler Richtung auf die Auflageleisten 62 gezogen. Zum Bewegen der Hakenarme 66 sind hier Linearzylinder **68** vorgesehen.

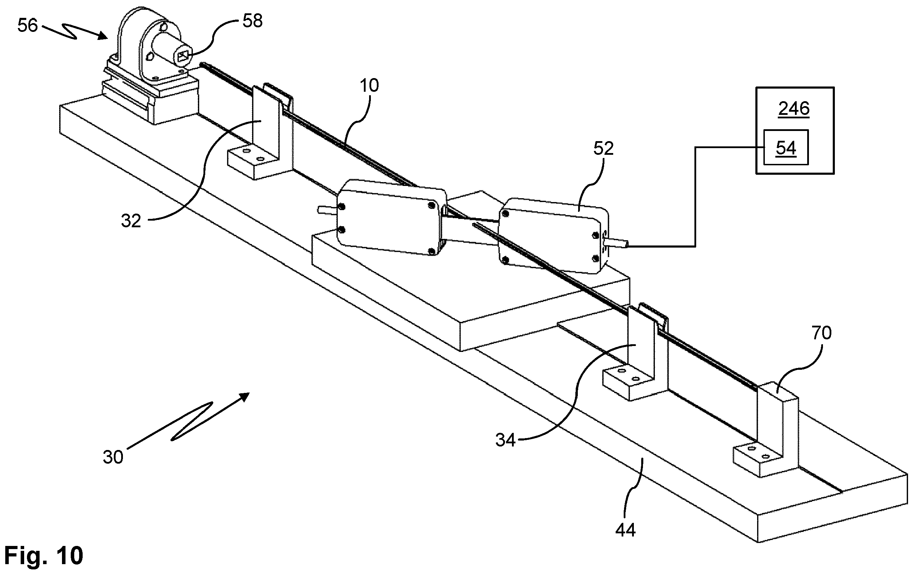

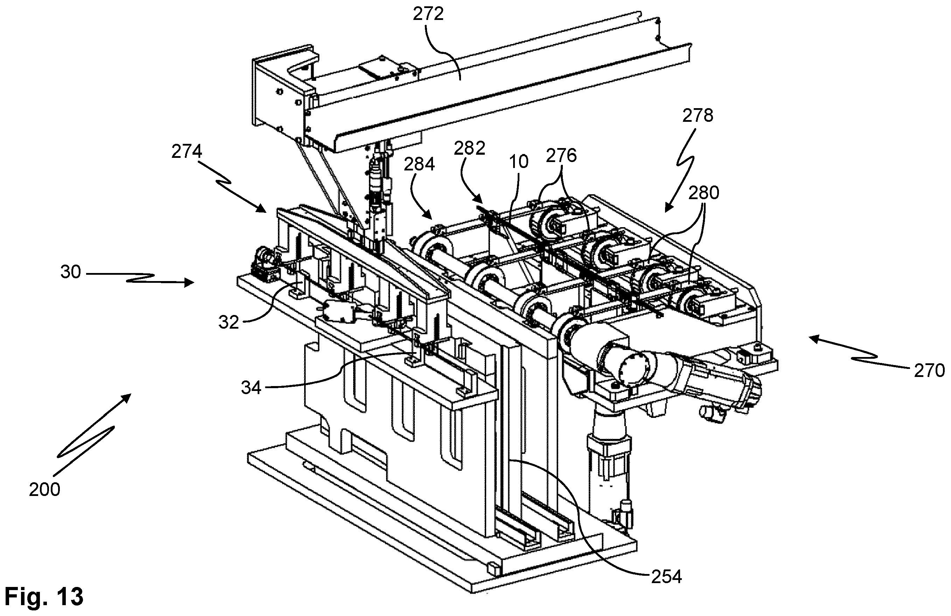

**Figur 10** zeigt eine weitere Messstation 30 zum Bestimmen der Geradheit von Stableitern 10 in der oben beschriebenen Weise. Die Messstation kann Teil einer in **Figur 13** ausschnittsweise gezeigten Fertigungsanlage 200 sein. Bei der Messstation 30 von Figur 10 sind zwei Auflagen 32, 34 und eine Messeinrichtung 52 feststehend an einem Grundkörper 44 befestigt. Zudem ist ein Anschlag **70** feststehend an dem Grundkörper 44 befestigt.

Die Messeinrichtung 52 ist auch hier mit einer Auswerteeinrichtung 54 verbunden, die dazu eingerichtet ist, in der oben beschriebenen Weise die Geradheit des Stableiters 10 zu bestimmen sowie die Messeinrichtung 52 und eine Wendeeinrichtung 56 anzusteuern. Die Auswerteeinrichtung 54 kann mit der Steuereinrichtung 246 der Fertigungsanlage 200 verbunden und insbesondere in diese integriert sein. Die Steuereinrichtung 246 kann erforderlichenfalls eine Richteinrichtung 224 einstellen. Die Messeinrichtung 52 arbeitet auch hier berührungslos und ist als optische Messeinrichtung, insbesondere als Lasermesseinrichtung, ausgebildet.

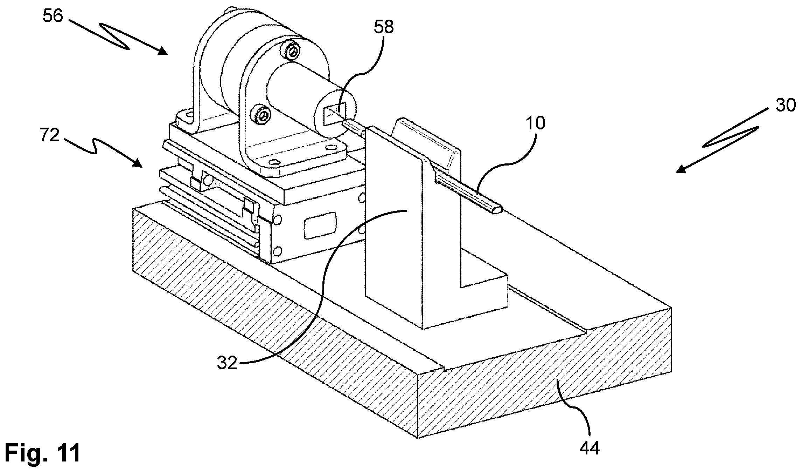

Die Wendeeinrichtung 56 ist über eine Linearführung **72** in Längsrichtung des Stableiters 10 verschieblich, vergleiche auch **Figuren 11** und **12****.** Eine drehbare Aufnahme 58 der Wendeeinrichtung 56 weist eine Innenkontur auf, die an einen Querschnitt des Stableiters 10 angepasst ist. Die Innenkontur der Aufnahme 58 kann sich zum offenen Ende hin erweitern, siehe insbesondere Figur 12.

Beim Messen der Durchbiegungen liegt der Stableiter 10 mit einem Ende an dem Anschlag 70 an. Wenn die Wendeeinrichtung 56 auf das andere Ende des Stableiters 10 aufgeschoben wird, verschiebt sich der Stableiter 10 somit nicht. Verfälschungen der Durchbiegungen aufgrund einer Verschiebung des Stableiters 10 in Längsrichtung werden dadurch vermieden.

Figur 13 zeigt ausschnittsweise eine Fertigungsanlage 200. In Figur 13 gezeigt sind die Messstation 30 von Figur 8, ein Querförderer **270** und ein an einem Portal **272** geführter Greifer **274** mit hier vier Greifzangen. Eine in Figur 13 nicht gezeigte Herstellmaschine 202 der Fertigungsanlage 200 umfasst eine Abrolleinrichtung 220, eine Richteinrichtung 224, eine Abisoliereinrichtung 228 und eine Trenneinrichtung 230, vergleiche Figur 1 und die obige Beschreibung.

Der Querförderer 270 weist mehrere Sätze von Halteeinrichtungen **276** für Gruppen von Stableitern 10 auf. Je maximal vier Stableiter 10 können in die Halteeinrichtungen 276 eines jeden Satzes eingelegt werden. Die Halteeinrichtungen 276 sind quer zur Längsrichtung der Stableiter 10 beweglich, hier mittels eines Riementriebs **278** umfassend mehrere Riemen **280,** an welchen die Halteeinrichtungen 276 befestigt sind.

Nach dem Zerteilen werden die Stableiter 10 an einer Verkettungsstelle **282** an den Querförderer 270 übergeben. Der Querförderer 270 verbringt die Stableiter 10 dann an eine Übergabestelle **284.** Zur Weiterbearbeitung werden der oder die Stableiter 10 aus einem Satz von Halteeinrichtungen 276 mittels des Greifers 274 von der Übergabestelle 284 in eine Speichereinrichtung 254 eingesetzt. Die Speichereinrichtung 254 ist hier als eine Kassette ausgebildet. Ein zu prüfender Stableiter 10 wird von der Übergabestelle 284 mittels des Greifers 274 auf die Auflagen 32, 34 der Messstation 30 aufgelegt. Der Greifer 274 wird in beiden Fällen quer zur Längsrichtung der Stableiter 10 an dem Portal 272 verfahren.

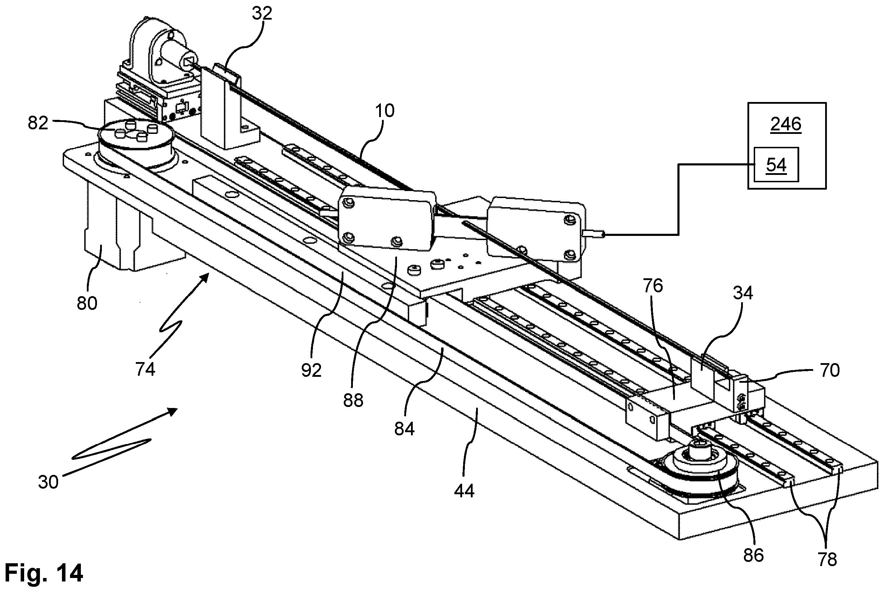

**Figur 14** zeigt eine weitere Messstation 30 zum Bestimmen der Geradheit von Stableitern 10 in der oben beschriebenen Weise. Die Messstation 30 von Figur 14 könnte anstelle der Messstation 30 von Figur 10 bei der Fertigungsanlage 200 von Figur 13 verwendet werden.

Bei der Messstation 30 von Figur 14 ist eine erste Auflage 32 feststehend an einem Grundkörper 44 angeordnet. Bei der feststehenden Auflage 32 ist eine in Längsrichtung des Stableiters 10 verschiebliche Wendeeinrichtung 56 vorgesehen. Zu Aufbau und Funktion der Wendeeinrichtung 56 sei auf die Figuren 10 bis 12 und die vorstehende Beschreibung verwiesen.

Eine zweite Auflage 34 ist verschieblich an dem Grundkörper 44 geführt. An der verschieblichen Auflage 34 ist ein Anschlag 70 befestigt. Der Anschlag 70 und die verschiebliche Auflage 34 sind somit gemeinsam relativ zu der feststehenden Auflage 32 bewegbar. Durch Verändern des Abstands der Auflagen 32, 34 kann die Messstation 30 an unterschiedlich lange Stableiter 10 angepasst werden.

Zum Verschieben der Auflage 34 dient ein Riementrieb **74.** Mittels eines Motors **80** ist eine erste Riemenscheibe **82** antreibbar, um einen Riemen **84** zu bewegen. Der Riemen 84 ist hier ein Zahnriemen. Eine zweite Riemenscheibe **86** dient der Umlenkung des Riemens 84.

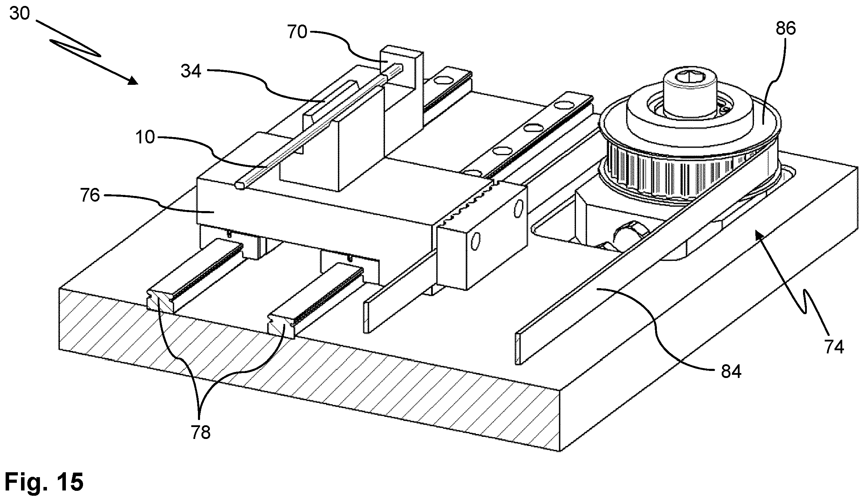

Die verschiebliche Auflage 34 und der Anschlag 70 sind an einem Auflageschlitten **76** angeordnet. Der Auflageschlitten 76 ist auf Schienen **78** am Grundkörper 44 geführt. Der Auflageschlitten 76 ist an dem Riemen 84 fixiert, siehe auch **Figur 15****.** Derart können die Auflage 34 und der Anschlag 70 mittels des Riementrebs 74 relativ zur feststehenden Auflage 32 bewegt werden.

Auch die Messeinrichtung 52 ist relativ zu der feststehenden Auflage 32 verschieblich. Bewegungen der Messeinrichtung 52 und der verschieblichen Auflage 34 sind derart gekoppelt, dass ein Verschiebeweg der Messeinrichtung 52 halb so groß ist wie der Verschiebeweg der Auflage 34. Dadurch kann erreicht werden, dass sich die Messeinrichtung 52 stets mittig zwischen den Auflagen 32, 34 befindet.

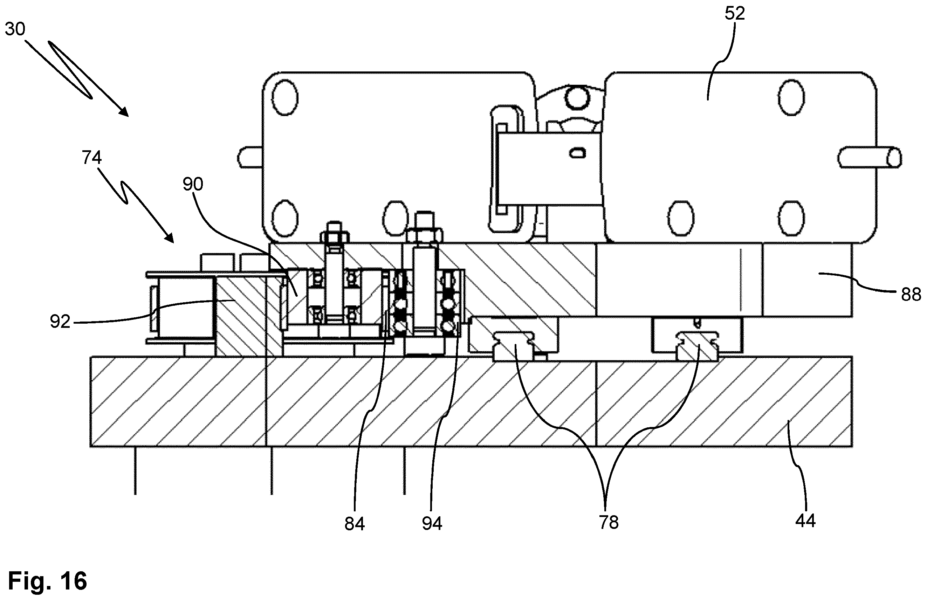

Die Messeinrichtung 52 ist auf einem Messschlitten **88** angeordnet. Der Messschlitten 88 ist ebenfalls auf den Schienen 78 am Grundkörper 44 geführt. Ferner wird auch der Messschlitten 88 mittels des Riementriebs 74 bewegt, vergleiche auch **Figur 16****.** Um die unterschiedlichen Verschiebewege des Messschlittens 88 und des Auflageschlittens 76 einzurichten, ist der Messschlitten 88 nicht starr an den Riemen 84 gekoppelt. An dem Messschlitten 88 ist eine Zahnrolle **90** gelagert. Die Zahnrolle 90 rollt einerseits an einer Zahnstange **92** ab, die feststehend an dem Grundkörper 44 angeordnet ist. Andererseits rollt die Zahnrolle 90 an dem Riemen 84 ab. Eine Druckrolle **94** kann den Riemen 84 gegen die Zahnrolle 90 drücken.

Die zwischen der feststehenden Zahnstange 92 und dem bewegten Riemen 84 rollende Zahnrolle 90 bewirkt somit eine Halbierung des Weges des Riemens 84 für den Messschlitten 88. Derart kann auf mechanischem Wege eine präzise Kopplung zwischen dem Messschlitten 88 und der verschieblichen Auflage 34 eingerichtet werden. Auf diese Weise wird erreicht, dass die Messeinrichtung 52 unabhängig von der Länge des Stableiters 10 - und entsprechend unabhängig von dem Abstand der Auflagen 32, 34 - stets die maximale Durchbiegung des Stableiters 10 in der Mitte zwischen den Auflagen 32, 34 erfasst.

Auch hier ist die Messeinrichtung 52 mit einer Auswerteeinrichtung 54 (vergleiche Figur 14) verbunden, die dazu eingerichtet ist, in der oben beschriebenen Weise die Geradheit des Stableiters 10 zu bestimmen sowie die Messeinrichtung 52, die Wendeeinrichtung 56 und den Riementrieb 74 anzusteuern. Die Auswerteeinrichtung 54 kann mit der Steuereinrichtung 246 der Fertigungsanlage 200 verbunden und insbesondere in diese integriert sein. Die Steuereinrichtung 246 kann erforderlichenfalls eine Richteinrichtung 224 einstellen. Die Messeinrichtung 52 arbeitet auch hier berührungslos und ist als optische Messeinrichtung, insbesondere als Lasermesseinrichtung, ausgebildet.

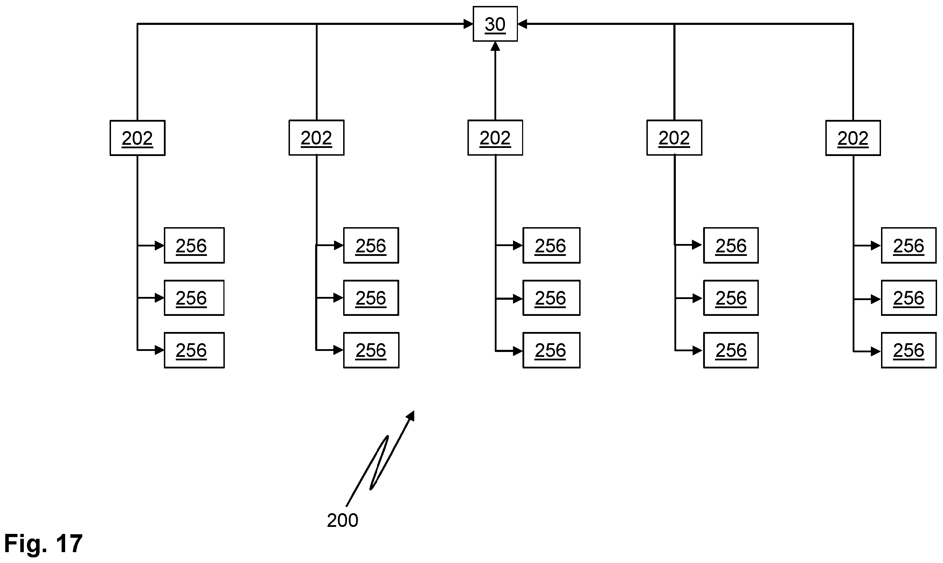

**Figur 17** zeigt eine Fertigungsanlage 200 in einer abstrakten Darstellung.

Die Fertigungsanlage 200 umfasst mehrere, hier fünf Herstellmaschinen 202 zum Herstellen von geraden Stableitern 10. Die zu prüfenden Stableiter 10 aller Herstellmaschinen 102 werden einer gemeinsamen Messstation 30 zugeführt. Da nur ein geringer Anteil der hergestellten geraden Stableiter auf Geradheit geprüft wird, genügt eine einzige Messstation. Bei unzureichender Geradheit der geraden Stableiter 10 kann eine übergeordnete Steuereinrichtung (in Figur 17 nicht näher dargestellt), die mit allen Herstellmaschinen 202 und der Messstation 30 verbunden ist, eine Einstellung einer Richteinrichtung der jeweiligen Herstellmaschine 202 korrigieren.

Für jede der Herstellmaschinen 202 sind mehrere, hier je drei, Biegemaschinen 256 vorgesehen, um die geraden Stableiter 10 zu U-förmig gebogenen Stableitern 10' umzuformen. Die geraden Stableiter 10 aus einer der Herstellmaschinen 202 werden jeweils einer der zugeordneten Biegemaschinen 256 zugeführt. Da die Taktzeit der Biegemaschinen 256 länger ist als die Taktzeit der Herstellmaschinen 202 kann derart die Kapazität sowohl der Herstellmaschinen 202 als auch der Biegemaschinen 256 ausgenutzt werden.

Zusammenfassend betrifft die Erfindung Verfahren und Vorrichtungen zum Herstellen von Stableitern. Gerade Stableiter werden durch Geraderichten und Zerteilen von Draht erhalten. Einige der geraden Stableiter werden auf Geradheit geprüft. Hierzu werden die zu prüfenden Stableiter auf zwei Auflagen aufgelegt und es wird eine schwerkraftbedingte Durchbiegung des jeweiligen Stableiters zwischen den Auflagen bestimmt. Eine nominelle Durchbiegung eines perfekt geraden Stableiters entspricht einem Mittelwert von Durchbiegungen, die sich einstellen, wenn Stableiter in zwei um 180° um ihre Längsachse gedrehten Ausrichtungen auf die Auflagen aufgelegt werden. Durch Vergleich der Durchbiegung bei einer der Ausrichtungen des Stableiters mit der nominellen Durchbiegung kann auf die Geradheit des Stableiters geschlossen werden. Die nominelle Durchbiegung kann für jeden Stableiter individuell aus den beiden Durchbiegungen bei um 180° gedrehter Auflage dieses Stableiters ermittelt werden; in diesem Fall gibt die Differenz der Abweichungen ein Maß für die Abweichung von der nominellen Durchbiegung an, ohne dass die nominelle Durchbiegung explizit berechnet zu werden braucht. Alternativ kann für gleichartige Stableiter die nominelle Durchbiegung explizit durch beidseitige Messung eines oder mehrerer Stableiter bestimmt werden; für weitere gleichartige Stableiter braucht dann nur eine einzige Durchbiegung ermittelt zu werden, die mit der nominellen Durchbiegung verglichen wird. Für Stableiter mit Rechteckquerschnitt kann auf diese Weise die Geradheit in beiden zu den Flachseiten senkrechten Ebenen bestimmt werden. Die Mehrzahl der Stableiter wird nicht auf Geradheit geprüft, sondern einer weiteren Bearbeitung zugeführt. Insbesondere werden die geraden Stableiter zu U-förmigen Stableitern gebogen. Die U-förmigen Stableiter können in einen Grundkörper eines Stators eingesetzt werden.

### Bezugszeichenliste

gerader Stableiter **10**
gebogener Stableiter **10'**
Längsachse **12**
Länge **14**
erste Flachseite **16**
zweiten Flachseite **18**
weitere erste Flachseite **20**
weitere zweite Flachseite **22**
Abstand **24** der weiteren ersten und weiteren zweiten Flachseiten 20, 22
Abstand **26** der ersten und zweiten Flachseiten 16, 18
Messstation **30**
Auflagen **32**
Abstand **35** der Auflagen 32, 34
Durchbiegung **36**
erste Durchbiegung **36a**
zweite Durchbiegung **36b**
weitere erste Durchbiegung **36c**
weitere zweite Durchbiegung **36d**
Referenzstück **38**
Abstand **40** zwischen den Auflagen 32, 34 und dem Referenzstück 38
Abstand **42** zwischen dem Stableiter 10 und dem Referenzstück 38
Grundkörper **44**
Schiebeelement **46**
Greifer **50**
Messeinrichtung **52**
Auswerteeinrichtung **54**
Wendeeinrichtung **56**
Aufnahme **58** der Wendeeinrichtung 56
Zwischenspeicher **60**
Auflagenleisten **62**
Fördereinrichtung **64**
Hakenarme **66**
Linearzylinder **68**
Anschlag **70**
Linearführung **72**
Riementrieb **74**
Auflageschlitten **76**
Schienen **78**
Motors **80**
angetriebene Riemenscheibe **82**
Riemen **84**
zweite Riemenscheibe **86**
Messschlitten **88**
Zahnrolle **90**
Zahnstange **92**
Druckrolle **94**
erste Flachseite auflegen **102**
erste Durchbiegung bestimmen **104**
weitere erste Flachseite auflegen **106**
weitere erste Durchbiegung bestimmen **108**
zweite Flachseite auflegen **110**
zweite Durchbiegung bestimmen **112**
weitere zweite Flachseite auflegen **114**
weitere zweite Durchbiegung bestimmen **116**
nominelle Durchbiegung bestimmen **118**
weitere nominelle Durchbiegung bestimmen **120**
Abweichung zwischen erster Durchbiegung und nomineller Durchbiegung bestimmen **122**
Abweichung zwischen weiterer erster Durchbiegung und weiterer nomineller Durchbiegung bestimmen **124**
Differenz zwischen erster und zweiter Durchbiegung halbieren, um Abweichung von nomineller Durchbiegung zu bestimmen **122a**
Differenz zwischen weiterer erster und weiterer zweiter Durchbiegung halbieren, um weitere Abweichung von weiteren nomineller Durchbiegung zu bestimmen **124a**
Einstellung der Richteinrichtung für die erste Richtebene korrigieren **126**
Einstellung der Richteinrichtung für die zweite Richtebene korrigieren **128**
Fertigungsanlage **200**
Herstellmaschine **202**
Sortiermaschine **210**
Draht **216**
Spule **218**
Abrolleinrichtung **220**
Isolierschicht **222**
Richteinrichtung **224**
Richtrollen **226**
Abisoliereinrichtung **228**
Trenneinrichtung **230**
Zuführeinrichtung **232**
Aufnahmestelle **236**
Aufnahmen **238** der Sortiermaschine 210
Drehachse **240**
Rotor **242**
Schiebeelement **46**
Sensor **244**
Steuereinrichtung **246**
erste Richtung **248**
zweite Richtung **250**
Speichereinrichtung **254**
Biegemaschine **256**
Richtrollensatz **258** für eine erste Richtebene
Richtrollensatz **260** für eine zweite Richtebene
Durchlaufrichtung **262**
Stelleinrichtungen **264**
Stellantrieb **266**
Führungseinrichtung **267a**
Ausschleuseinrichtung **267b**
Messstelle **268**
Querförderer **270**
Portal **272**
Greifer **274**
Halteeinrichtungen **276**
Riementrieb **278** des Querförderers
Riemen **280**
Verkettungsstelle **282**
Übergabestelle **284**

## Patentansprüche

1. Verfahren zum Herstellen von Stableitern (10),
wobei Draht (216) von einer Spule (218) abgewickelt wird;
wobei der abgewickelte Draht (216) mit einer Richteinrichtung (224) geradegerichtet wird;
wobei der geradegerichtete Draht (216) zerteilt wird, sodass gerade Stableiter (10) erhalten werden;
wobei die geraden Stableiter (10) mehrheitlich einer nachfolgenden Bearbeitung zugeführt werden;
**dadurch gekennzeichnet,**
**dass** mehrere der geraden Stableiter (10) zu einer Messstation (30) mit zwei voneinander beabstandeten Auflagen (32, 34) verbracht werden, wo zur Geradheitsprüfung eine Durchbiegung (36, 36a-36d) des jeweiligen Stableiters (10) unter seinem Eigengewicht ermittelt wird;
**dass** wenigstens einer der Stableiter (10) auf den Auflagen (32, 34) um 180° um seine Längsachse (12) gedreht wird, und dass bei beiden Ausrichtungen des Stableiters (10) eine Durchbiegung (36, 36a-36d) aufgrund des Eigengewichts des Stableiters (10) bestimmt wird.

2. Verfahren nach Anspruch 1, **dadurch gekennzeichnet, dass** die Geradheit der Stableiter (10) in zwei, vorzugsweise zueinander senkrechten, Ebenen geprüft wird.

3. Verfahren nach einem der vorhergehenden Ansprüche, **dadurch gekennzeichnet, dass** eine Einstellung der Richteinrichtung (224) in Abhängigkeit vom Ergebnis der Geradheitsprüfung korrigiert wird, vorzugsweise automatisch korrigiert wird, insbesondere wobei die Richteinrichtung (224) mehrere alternierend auf unterschiedlichen Seiten des Drahts angeordnete Richtrollen (226) aufweist und zum Korrigieren der Einstellung der Richteinrichtung (224) eine Position der in Durchlaufrichtung (262) des Drahts (216) vorletzten Richtrolle (226) verändert wird.

4. Verfahren nach einem der Ansprüche 1 bis 3, **dadurch gekennzeichnet,**
**dass** zum Zuführen der Stableiter (10) zu der nachfolgenden Bearbeitung eine Sortiermaschine (210) mit einem um eine Drehachse (240) drehbaren Rotor (242) verwendet wird, wobei der Rotor (242) mehrere in Umfangsrichtung gegeneinander versetzte Aufnahmen (238) für je einen Stableiter (10) aufweist;
**dass** die der nachfolgenden Bearbeitung zuzuführenden Stableiter (10) auf eine der Aufnahmen (238) des Rotors aufgelegt werden, wobei sich die Aufnahme (238) an einer Aufnahmestelle (236) befindet;
und **dass** die zu prüfenden Stableiter (10) an der Aufnahmestelle (236) auf bewegliche Auflagen (32, 34) der Messstation (30) aufgelegt werden,
insbesondere wobei beim Auflegen der zu prüfenden Stableiter (10) auf die Auflagen (32, 34) der Messstation (30) der Rotor (242) so gedreht ist, dass sich keine der Aufnahmen (238) an der Aufnahmestelle (236) befindet.

5. Verfahren nach einem der Ansprüche 1 bis 3, **dadurch gekennzeichnet,**
**dass** die geraden Stableiter (10) nach dem Zerteilen an eine Übergabestelle (284) verbracht werden;
und **dass** derselbe Greifer (274) verwendet wird, um die weiterzubearbeitenden Stableiter (10) von der Übergabestelle (284) an die nachfolgende Bearbeitung weiterzugeben, und um die zu prüfenden Stableiter (10) von der Übergabestelle (284) auf die Auflagen (32, 34) der Messstation (30) zu verbringen,
insbesondere wobei der Greifer (274) quer zur Längsrichtung der Stableiter (10) verfahren wird.

6. Verfahren nach einem der vorhergehenden Ansprüche, **dadurch gekennzeichnet, dass** der Draht (216) eine Isolierschicht (222) aufweist, die nach dem Geraderichten bereichsweise entfernt wird, und dass der Draht (216) in den abisolierten Bereichen zerteilt wird.

7. Verfahren nach einem der vorhergehenden Ansprüche, **dadurch gekennzeichnet, dass** die weiterzuverarbeitenden Stableiter (10) bei der nachfolgenden Bearbeitung gebogen werden, sodass U-förmig gebogene Stableiter (10') erhalten werden.

8. Fertigungsanlage (200) für Stableiter (10), insbesondere zur Durchführung eines Verfahrens nach einem der vorhergehenden Ansprüche, aufweisend
- wenigstens eine Herstellmaschine (202) für Stableiter (10) mit einer Abrolleinrichtung (220) zum Abwickeln von Draht (216) von einer Spule (218), mit einer Richteinrichtung (224) zum Geraderichten des abgewickelten Drahts (216), mit einer Abisoliereinrichtung (228) zum bereichsweisen Entfernen einer Isolierschicht (222) von dem Draht (216), und mit einer Trenneinrichtung (230) zum Zerteilen des Drahtes (216), sodass einzelne Stableiter (10) erhalten werden;
**dadurch gekennzeichnet, dass** die Fertigungsanlage (200) ferner aufweist:
- eine Messstation (30) mit zwei voneinander beabstandeten Auflagen (32, 34) und mit einer Messeinrichtung (52) zum Bestimmen einer Durchbiegung (36, 36a-36d) eines auf die Auflagen (32, 34) aufgelegten Stableiters (10);
- und eine Wendeeinrichtung (56) zum Drehen eines auf die Auflagen (32, 34) aufgelegten Stableiters (10) um seine Längsachse (12).

9. Fertigungsanlage (200) nach Anspruch 8, **dadurch gekennzeichnet, dass** die Messeinrichtung (52) zur berührungslosen Ermittlung der Durchbiegung (36, 36a-36d) eines auf die Auflagen (32, 34) aufgelegten Stableiters (10) eingerichtet ist, insbesondere wobei die Messeinrichtung (52) eine Lasermesseinrichtung ist.

10. Fertigungsanlage (200) nach Anspruch 8 oder 9, weiterhin aufweisend einen Stellantrieb (266) zum Einstellen einer Position einer Richtrolle (226) der Richteinrichtung (224), vorzugsweise der in Durchlaufrichtung (262) des Drahtes (216) vorletzten Richtrolle (226).

11. Fertigungsanlage (200) nach einem der Ansprüche 8 bis 10, weiterhin aufweisend eine Sortiermaschine (210) mit einem um eine Drehachse (240) drehbaren Rotor (242), der mehrere in Umfangsrichtung gegeneinander versetzte Aufnahmen (238) für je einen Stableiter (10) aufweist, insbesondere wobei die Auflagen (32, 34) der Messstation (30) zwischen einer Aufnahmestelle (236) bei dem Rotor (242) und einer Messstelle (268) bei der Messeinrichtung (52) bewegbar sind.

12. Fertigungsanlage (200) nach einem der Ansprüche 8 bis 11, **dadurch gekennzeichnet, dass** die Messstation (30) einen Zwischenspeicher (60) für Stableiter (10) aufweist, und dass die Messstation (30) eine Fördereinrichtung (64) aufweist, um Stableiter (10) von den Auflagen (32, 34) in den Zwischenspeicher (60) zu verbringen.

13. Fertigungsanlage (200) nach einem der Ansprüche 8 bis 12, weiterhin aufweisend einen Greifer (274), um Stableiter (10) von einer Übergabestelle (284) wahlweise einer nachfolgenden Bearbeitung zuzuführen, insbesondere in eine Speichereinrichtung (254) der Fertigungsanlage (200) einzubringen, oder auf die Auflagen (32, 34) der Messstation (30) aufzulegen, insbesondere wobei der Greifer (274) quer zur Längsrichtung der Stableiter (10) verfahrbar ist, insbesondere an einem Portal (272).

14. Fertigungsanlage (200) nach Anspruch 13, weiterhin aufweisend einen Querförderer (270) mit mehreren Halteeinrichtungen (276) für einen oder mehrere Stableiter (10), wobei die Halteeinrichtungen (276) quer zur Längsrichtung der Stableiter (10) bewegbar sind, um die Stableiter (10) einzeln oder zu mehreren zu der Übergabestelle (284) zu verbringen.

15. Fertigungsanlage (200) nach einem der Ansprüche 8 bis 14, **dadurch gekennzeichnet, dass** die Fertigungsanlage (200) mehrere Herstellmaschinen (202) aufweist, denen eine einzige Messstation (30) zugeordnet ist.

16. Fertigungsanlage (200) nach einem der Ansprüche 8 bis 15, **dadurch gekennzeichnet, dass** die Fertigungsanlage (200) wenigstens eine Biegemaschine (256) aufweist, vorzugsweise wobei für jede Herstellmaschine (202) mehrere Biegemaschinen (256) vorhanden sind.

## Claims

1. Method for manufacturing bar conductors (10),
wire (216) being unwound from a coil (218);
the unwound wire (216) being straightened with a straightening device (224);
the straightened wire (216) being divided so that straight bar conductors (10) are obtained;
the straight bar conductors (10) being mostly supplied to subsequent processing;
**characterized**
**in that** a plurality of the straight bar conductors (10) are brought to a measuring station (30) having two spaced-apart supports (32, 34), where a deflection (36, 36a-36d) of the particular bar conductor (10) under its own weight is determined for straightness testing;
**in that** at least one of the bar conductors (10) on the supports (32, 34) is rotated 180° about its longitudinal axis (12), **and in that** in both orientations of the bar conductor (10) a deflection (36, 36a-36d) is determined due to the dead weight of the bar conductor (10).

2. Method according to claim 1, **characterized in that** the straightness of the bar conductors (10) is tested in two planes, preferably perpendicular to each other.

3. Method according to either of the preceding claims, **characterized in that** a setting of the straightening device (224) is corrected depending on the result of the straightness testing, preferably automatically, in particular the straightening device (224) having a plurality of straightening rollers (226) arranged alternately on different sides of the wire and in order to correct the setting of the straightening device (224) a position of the penultimate straightening roller (226) in the direction of travel (262) of the wire (216) is changed.

4. Method according to any of claims 1 to 3, **characterized in that** a sorting machine (210) with a rotor (242) rotatable about a rotary axis (240) is used to supply the bar conductors (10) to the subsequent processing, the rotor (242) having a plurality of circumferentially offset receptacles (238) for one bar conductor (10) in each case;
**in that** the bar conductors (10) to be supplied to the subsequent processing are placed on one of the receptacles (238) of the rotor, the receptacle (238) being located at a receiving point (236);
**and in that** the bar conductors (10) to be tested are placed on movable supports (32, 34) of the measuring station (30) at the receiving point (236),
in particular when placing the bar conductors (10) to be tested on the supports (32, 34) of the measuring station (30) the rotor (242) being rotated so that none of the receptacles (238) are located at the receiving point (236).

5. Method according to any of claims 1 to 3, **characterized in that** the straight bar conductors (10) are brought to a transfer point (284) after being divided;
**and in that** the same gripper (274) is used to transfer the bar conductors (10) to be further processed from the transfer point (284) to the subsequent processing, and to bring the bar conductors (10) to be tested from the transfer point (284) onto the supports (32, 34) of the measuring station (30),
in particular the gripper (274) being moved transversely to the longitudinal direction of the bar conductors (10).

6. Method according to any of the preceding claims, **characterized in that** the wire (216) has an insulating layer (222) which is partially removed after the straightening, **and in that** the wire (216) is divided in the stripped areas.

7. Method according to any of the preceding claims, **characterized in that** the bar conductors (10) to be further processed are bent during the subsequent processing so that U-shaped bent bar conductors (10') are obtained.

8. Production line (200) for bar conductors (10), in particular for carrying out a method according to any of the preceding claims, comprising
- at least one manufacturing machine (202) for bar conductors (10) having an unrolling device (220) for unwinding wire (216) from a coil (218), having a straightening device (224) for straightening the unwound wire (216), having a stripping device (228) for partially removing an insulating layer (222) from the wire (216), and having a separating device (230) for dividing the wire (216) so that individual bar conductors (10) are obtained;
**characterized in that** the production line (200) further comprises:
- a measuring station (30) having two spaced-apart supports (32, 34) and having a measuring device (52) for determining a deflection (36, 36a-36d) of a bar conductor (10) placed on the supports (32, 34);
- and a turning device (56) for rotating a bar conductor (10) placed on the supports (32, 34) about its longitudinal axis (12).

9. Production line (200) according to claim 8, **characterized in that** the measuring device (52) is set up for non-contact determination of the deflection (36, 36a-36d) of a bar conductor (10) placed on the supports (32, 34), in particular the measuring device (52) being a laser measuring device.

10. Production line (200) according to claim 8 or 9, further comprising an actuator (266) for setting a position of a straightening roller (226) of the straightening device (224), preferably the penultimate straightening roller (226) in the direction of travel (262) of the wire (216).

11. Production line (200) according to any of claims 8 to 10, further comprising a sorting machine (210) with a rotor (242) rotatable about a rotary axis (240), which rotor has a plurality of circumferentially offset receptacles (238) for one bar conductor (10) in each case, in particular wherein the supports (32, 34) of the measuring station (30) are movable between a receiving point (236) at the rotor (242) and a measuring point (268) at the measuring device (52).

12. Production line (200) according to any of claims 8 to 11,
**characterized in that** the measuring station (30) has an intermediate store (60) for bar conductors (10), **and in that** the measuring station (30) has a conveying device (64) to bring bar conductors (10) from the supports (32, 34) into the intermediate store (60).

13. Production line (200) according to any of claims 8 to 12, further comprising a gripper (274) for selectively supplying bar conductors (10) from a transfer point (284) to subsequent processing, in particular to insert them into a storage device (254) of the production line (200), or to place them on the supports (32, 34) of the measuring station (30), in particular wherein the gripper (274) is movable transversely to the longitudinal direction of the bar conductors (10), in particular on a gantry (272).

14. Production line (200) according to claim 13, further comprising a transverse conveyor (270) having a plurality of holding devices (276) for one or more bar conductors (10), wherein the holding devices (276) are movable transversely to the longitudinal direction of the bar conductors (10) in order to bring the bar conductors (10) individually or in groups to the transfer point (284).

15. Production line (200) according to any of claims 8 to 14,
**characterized in that** the production line (200) has a plurality of manufacturing machines (202) to which a single measuring station (30) is assigned.

16. Production line (200) according to any of claims 8 to 15,
**characterized in that** the production line (200) has at least one bending machine (256), preferably a plurality of bending machines (256) being provided for each manufacturing machine (202).

## Revendications

1. Procédé pour la fabrication de conducteurs-rigides (10),
dans lequel du fil (216) est déroulé à partir d'une bobine (218);
dans lequel le fil (216) déroulé est redressé à l'aide d'un dispositif de redressage (224);
dans lequel le fil (216) redressé est découpé, de sorte que des conducteurs-rigides (10) droits sont obtenus;
dans lequel la majorité des conducteurs-rigides (10) droits sont alimentés à un traitement ultérieur; **caractérisé en ce que**
plusieurs des conducteurs-rigides (10) droits sont déplacés vers une station de mesure (30) avec deux supports (32, 34) espacés l'un de l'autre, où, pour le contrôle de rectitude, une flèche (36, 36a-36d) de chaque conducteur-rigide (10) sous son propre poids est déterminée;
**en ce qu'**au moins un des conducteurs-rigides (10) est tourné sur les supports (32, 34) de 180° autour de son axe longitudinal (12), et **en ce que**, dans les deux orientations du conducteur-rigide (10), une flèche (36, 36a-36d) due au propre poids du conducteur-rigide (10) est déterminée.

2. Procédé selon la revendication 1, **caractérisé en ce que** la rectitude des conducteurs-rigides (10) est contrôlée dans deux plans, de préférence perpendiculaires l'un à l'autre.

3. Procédé selon l'une des revendications précédentes, **caractérisé en ce qu'**un réglage du dispositif de redressage (224) est corrigé en fonction du résultat du contrôle de rectitude, de préférence corrigé automatiquement, en particulier dans lequel le dispositif de redressage (224) présente plusieurs galets de redressage (226) disposés alternativement sur différents côtés du fil, et pour corriger le réglage du dispositif de redressage (224), une position de l'avant-dernier galet de redressage (226) dans le sens de passage (262) du fil (216) est modifiée.

4. Procédé selon l'une des revendications 1 à 3, **caractérisé en ce que**, pour alimenter les conducteurs-rigides (10) au traitement ultérieur, une trieuse (210) avec un rotor (242) tournant autour d'un axe de rotation (240) est utilisée, le rotor (242) présentant plusieurs logements (238) décalés les uns par rapport aux autres dans la direction périphérique pour chaque conducteur-rigide (10);
**en ce que** les conducteurs-rigides (10) à alimenter au traitement ultérieur sont déposés sur l'un des logements (238) du rotor, le logement (238) se trouvant à un poste de prise (236);
et **en ce que** les conducteurs-rigides (10) à contrôler sont déposés au poste de prise (236) sur des supports mobiles (32, 34) de la station de mesure (30), en particulier lors du dépôt des conducteurs-rigides (10) à contrôler sur les supports (32, 34) de la station de mesure (30), le rotor (242) étant tourné de sorte qu'aucun des logements (238) ne se trouve au poste de prise (236).

5. Procédé selon l'une des revendications 1 à 3, **caractérisé en ce que** les conducteurs-rigides (10) droits, après découpe, sont déplacés vers un poste de transfert (284);
et **en ce que** le même préhenseur (274) est utilisé pour transférer les conducteurs-rigides (10) à traiter ultérieurement du poste de transfert (284) au traitement ultérieur, et pour déplacer les conducteurs-rigides (10) à contrôler du poste de transfert (284) sur les supports (32, 34) de la station de mesure (30),
en particulier dans lequel le préhenseur (274) est déplacé transversalement à la direction longitudinale des conducteurs-rigides (10).

6. Procédé selon l'une des revendications précédentes, **caractérisé en ce que** le fil (216) présente une couche d'isolation (222) qui, après redressage, est enlevée localement, et **en ce que** le fil (216) est découpé dans les zones dénudées.

7. Procédé selon l'une des revendications précédentes, **caractérisé en ce que** les conducteurs-rigides (10) à traiter ultérieurement sont pliés lors du traitement ultérieur, de sorte que des conducteurs-rigides (10') pliés en forme de U sont obtenus.

8. Installation de fabrication (200) pour conducteurs-rigides (10), en particulier pour la mise en œuvre d'un procédé selon l'une des revendications précédentes, comprenant
- au moins une machine de fabrication (202) pour conducteurs-rigides (10) avec un dispositif de déroulage (220) pour dérouler du fil (216) à partir d'une bobine (218), avec un dispositif de redressage (224) pour redresser le fil (216) déroulé, avec un dispositif de dénudage (228) pour enlever localement une couche d'isolation (222) du fil (216), et avec un dispositif de coupe (230) pour découper le fil (216), de sorte que des conducteurs-rigides (10) individuels sont obtenus;
**caractérisé en ce que** l'installation de fabrication (200) comprend en outre :
- une station de mesure (30) avec deux supports (32, 34) espacés l'un de l'autre et avec un dispositif de mesure (52) pour déterminer une flèche (36, 36a-36d) d'un conducteur-rigide (10) déposé sur les supports (32, 34);
- et un dispositif de retournement (56) pour tourner un conducteur-rigide (10) déposé sur les supports (32, 34) autour de son axe longitudinal (12).

9. Installation de fabrication (200) selon la revendication 8, **caractérisée en ce que** le dispositif de mesure (52) est conçu pour la détermination sans contact de la flèche (36, 36a-36d) d'un conducteur-rigide (10) déposé sur les supports (32, 34), en particulier dans lequel le dispositif de mesure (52) est un dispositif de mesure laser.

10. Installation de fabrication (200) selon la revendication 8 ou 9, comprenant en outre un actionneur de réglage (266) pour régler une position d'un galet de redressage (226) du dispositif de redressage (224), de préférence de l'avant-dernier galet de redressage (226) dans le sens de passage (262) du fil (216).

11. Installation de fabrication (200) selon l'une des revendications 8 à 10, comprenant en outre une trieuse (210) avec un rotor (242) tournant autour d'un axe de rotation (240), qui présente plusieurs logements (238) décalés les uns par rapport aux autres dans la direction périphérique pour chaque conducteur-rigide (10), en particulier dans lequel les supports (32, 34) de la station de mesure (30) sont mobiles entre un poste de prise (236) au niveau du rotor (242) et un poste de mesure (268) au niveau du dispositif de mesure (52).

12. Installation de fabrication (200) selon l'une des revendications 8 à 11, **caractérisée en ce que** la station de mesure (30) présente une mémoire tampon (60) pour conducteurs-rigides (10), et **en ce que** la station de mesure (30) présente un dispositif de transport (64) pour déplacer des conducteurs-rigides (10) des supports (32, 34) vers la mémoire tampon (60).

13. Installation de fabrication (200) selon l'une des revendications 8 à 12, comprenant en outre un préhenseur (274) pour alimenter des conducteurs-rigides (10) à partir d'un poste de transfert (284) soit à un traitement ultérieur, en particulier dans un dispositif de stockage (254) de l'installation de fabrication (200), soit pour déposer sur les supports (32, 34) de la station de mesure (30), en particulier dans lequel le préhenseur (274) est mobile transversalement à la direction longitudinale des conducteurs-rigides (10), en particulier sur un portail (272).

14. Installation de fabrication (200) selon la revendication 13, comprenant en outre un convoyeur transversal (270) avec plusieurs dispositifs de maintien (276) pour un ou plusieurs conducteurs-rigides (10), les dispositifs de maintien (276) étant mobiles transversalement à la direction longitudinale des conducteurs-rigides (10) pour déplacer les conducteurs-rigides (10) individuellement ou en groupe vers le poste de transfert (284).

15. Installation de fabrication (200) selon l'une des revendications 8 à 14, **caractérisée en ce que** l'installation de fabrication (200) présente plusieurs machines de fabrication (202), auxquelles une seule station de mesure (30) est attribuée.

16. Installation de fabrication (200) selon l'une des revendications 8 à 15, **caractérisée en ce que** l'installation de fabrication (200) présente au moins une machine à plier (256), de préférence dans laquelle plusieurs machines à plier (256) sont présentes pour chaque machine de fabrication (202).
